(19) Europäisches Patentamt
European Patent Office
Office européen des brevets

(11) **EP 3 898 290 B1**

(12) **EUROPEAN PATENT SPECIFICATION**

(45) Date of publication and mention
of the grant of the patent:
**31.08.2022 Bulletin 2022/35**

(21) Application number: **19818047.3**

(22) Date of filing: **10.12.2019**

(51) International Patent Classification (IPC):
**B60C 23/04** (2006.01)     **B60C 23/06** (2006.01)

(52) Cooperative Patent Classification (CPC):
**B60C 23/0488; B60C 23/0408; B60C 23/061**

(86) International application number:
**PCT/EP2019/084342**

(87) International publication number:
**WO 2020/126646 (25.06.2020 Gazette 2020/26)**

(54) **METHOD AND SYSTEM FOR MONITORING A TIRE DURING THE RUNNING OF A VEHICLE**

VERFAHREN UND VORRICHTUNG ZUR ÜBERWACHUNG DES REIFENS IM FAHRBETRIEB

MÉTHODE ET DISPOSITIF DE SURVEILLANCE D'UN PNEUMATIQUE PENDANT SA COURSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 IT 201800011176**

(43) Date of publication of application:
**27.10.2021 Bulletin 2021/43**

(73) Proprietor: **Pirelli Tyre S.P.A.**
**20126 Milan (IT)**

(72) Inventors:
• **GARBELLI, Daniele**
**20126 Milan (IT)**

• **SOCCI, Luciano**
**20126 Milano (IT)**

(74) Representative: **Lasca, Sergio**
**Pirelli & C. S.p.A.**
**Industrial Property (cdc 5104)**
**Viale Piero e Alberto Pirelli, 25**
**20126 Milano (IT)**

(56) References cited:
**WO-A1-2005/042322     WO-A1-2012/042369**
**WO-A2-2012/085655**

**Description**

**Field of the invention**

The present invention relates to a method and system for monitoring a tire during the running of a vehicle. The present invention also relates to a vehicle and a method for controlling a vehicle.

**Background art**

For some types of tires, especially those that require a high level of performance, monitoring units have been studied for some time which, when placed within said tires, will have the task of detecting tire's characteristic values, so as to allow substantially real-time monitoring and control of the operation and conditions of the tire.

These monitoring units will periodically dialogue with the devices on board the vehicle, so that all the detected information can be provided to the driver and/or vehicle control systems, to, for example, activate or adjust to the best alarm systems and/or vehicle dynamics control, braking, etc. Tire related information may be used within the vehicle or it can be used remotely, i.e. transmitted outside the vehicle or to the driver, e.g. to one or more personal devices and/or remote servers.

The monitoring units for tires typically comprise an electronic unit and a securing device.

The electronic unit comprises at least one sensor (for example a temperature sensor, a pressure sensor, a sensor able to measure/identify the tire's deformations during rolling, such as, for example, an accelerometer, a strain gauge, a piezoelectric sensor etc.) and a transmission system for sending the data detected by said at least one sensor to a receiving unit located on the vehicle. The electronic unit typically comprises a processing unit.

The securing device has the task of keeping the electronic unit fixed to the tire. In particular, in order to identify and measure the tire's deformations and estimate from said deformations certain parameters (for example the length of the footprint or contact area, the load acting on the tire, the angular velocity, the friction between the tire and the rolling surface, the wear of the tire, etc.) it may be convenient to fix one or more monitoring devices to the inner surface of the tire, for example on the tire's inner surface opposite to the tread or in general to a crown portion of a tire.

Other more basic tire monitoring systems only determine tire pressure and temperature.

The following documents describe tire monitoring systems and related monitoring methods: EP1202867 A1, EP1449684 A1, EP1572474 A1, EP1487681 A1, EP1642108 A1, EP1676112 A1, EP1675735 A1, EP1678019 A1, EP1794007 A1, WO2008/065465 A1, EP2346725 A1, EP2352653 A1, WO 2005/042322, WO 2012/042369, WO 2012/085655.

**Summary of the invention**

The Applicant has faced the problem of monitoring tires fitted to a vehicle during use of the vehicle; in particular the Applicant has faced the problem of tire monitoring using cheap monitoring units having a low degree of software and/or hardware complexity.

Among tire's parameters to be monitored during tire rolling, the length of the contact area between the tire and the rolling surface is one of the most challenging to be estimated since, as described above, it generally requires monitoring units with a sophisticated hardware comprising a sensor able to detect the tire's deformations during rolling, such as for example a sensor being able to measure radial acceleration or other physical quantity descriptive of the tire deformation during rolling. The length of the contact area can also be ultimately related to other parameters related to tires, such as for example the load exerted on the tire by the vehicle.

The sensor able to detect the tire's deformations is generally operated at high sampling frequency in order to properly reconstruct the profile (e.g. the acceleration profile) descriptive of the tire deformation over time. From such measured profile, the length of the contact area can be identified (e.g. by measuring the width of relevant peaks and/or valleys in the profile), and its length can be estimated.

When a substantially real time monitoring is carried out at typical running speed or at high speed, it has to be taken into account that the monitoring unit is caused to pass in correspondence of the tire contact area many times per second. For example at 50 km/h a tire rotates at about 7 turns/s, i.e. seven tire rotations per second.

Furthermore, on average the length of the contact area represents only a small portion, 3% to 15%, of the tire circumference, so that the monitoring unit remains in correspondence of the tire contact area for a very small amount of time over a tire rotation.

Moreover entering and exiting from the contact area is a very abrupt process generating sharp variations in the signal sensed by the sensor, further increasing the need of a very high sampling frequency in order to precisely identify the start and the end of the portion of the measured profile corresponding to the contact area.

Exemplarily, a signal representing the variation of the radial acceleration over a tire rotation (taken as an example of a physical quantity related to the tire deformation) has a Nyquist frequency of about 0.5 -1.5 kHz, or even higher, for vehicle speed up to 100 km/h.

The Nyquist frequency is generally related to the minimum frequency necessary to sample an analog signal without losing information.

Generally speaking, a sampling frequency much higher than Nyquist frequency, (in principle at least twice the Nyquist frequency), is necessary to properly sample an analog signal without losing information.

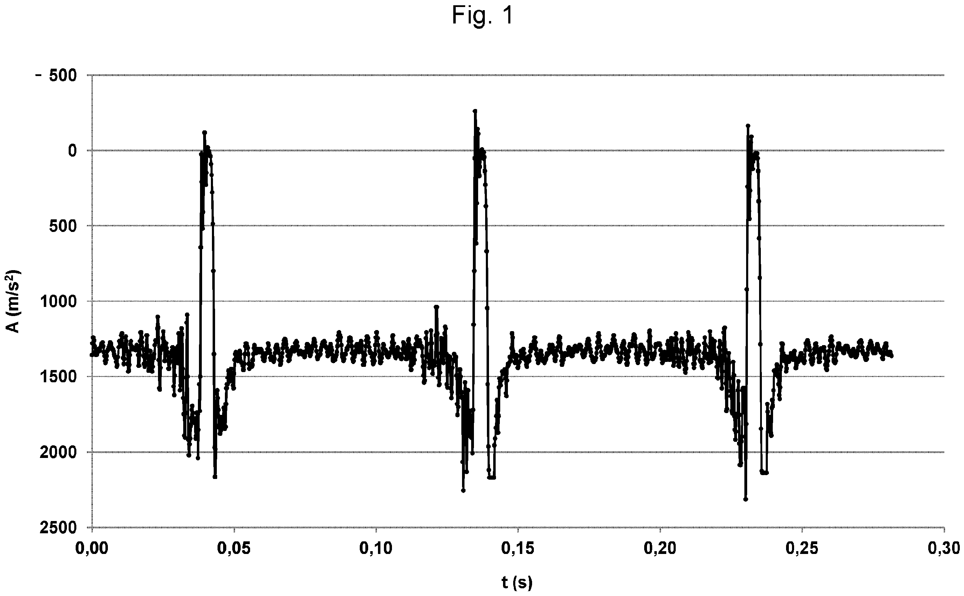

As an example of such high frequency sampling, in fig. 1 the radial acceleration is plot versus time for three consecutive tire rotations for a tire fitted on a vehicle traveling at a speed of 80 km/h, comprising an accelerometer secured to a crown portion of the tire, on the tire innerliner.

The plot was obtained with a sampling frequency of 5 kHz, which allowed resolving the three sharp peaks corresponding to the relative passages of the monitoring unit in correspondence of the contact area between the tire and the rolling surface, in particular its entering and remaining in correspondence of said contact area, and finally exiting from the contact area.

The proper resolution of the peaks corresponding to the passage of the monitoring unit at the contact area leads to the use of sophisticated and expensive monitoring units comprising sensors and related electronic control units which are driven and operated at high sampling frequency.

The use of high sampling frequency operated sensors implies high power needs and consumption.

In principle, these drawbacks could partially be mitigated by decreasing the sampling frequency, for example by reducing the frequency from 5 kHz of the example of fig. 1 down to, e.g. 2 kHz or lower; this leads however to a progressive decrease of the precision, up to eventually hinder the possibility of using a direct measurement of the length of the contact area since too few sampling points will be available for resolving, or even recognize, the above mentioned peaks over each tire rotation.

On the other hand, less expensive monitoring units are currently available on the market: they generally comprise temperature and/or pressure sensors and an accelerometer or other inertial sensor, whose output signal is only used to trigger the temperature and/or pressure measurements when the tire starts to rotate, so as to save power when the vehicle is at rest (e.g. during parking).

Since the pressure or the temperature do not need to be measured at high frequency, such sensors are typically operated at low sampling frequency in order to save power.

The Applicant has made the hypothesis that the acceleration sensor or other inertial device available on those monitoring units, which are normally used to "wake up" the temperature and/or pressure sensors when the tire starts to rotate, could be also used for detecting a tire deformation, i.e. that the output signal of said acceleration sensor, or other inertial device, could be taken as a measurement of a tire deformation; and thus devised the possibility of using such cheaper, low frequency operated monitoring units for tire monitoring.

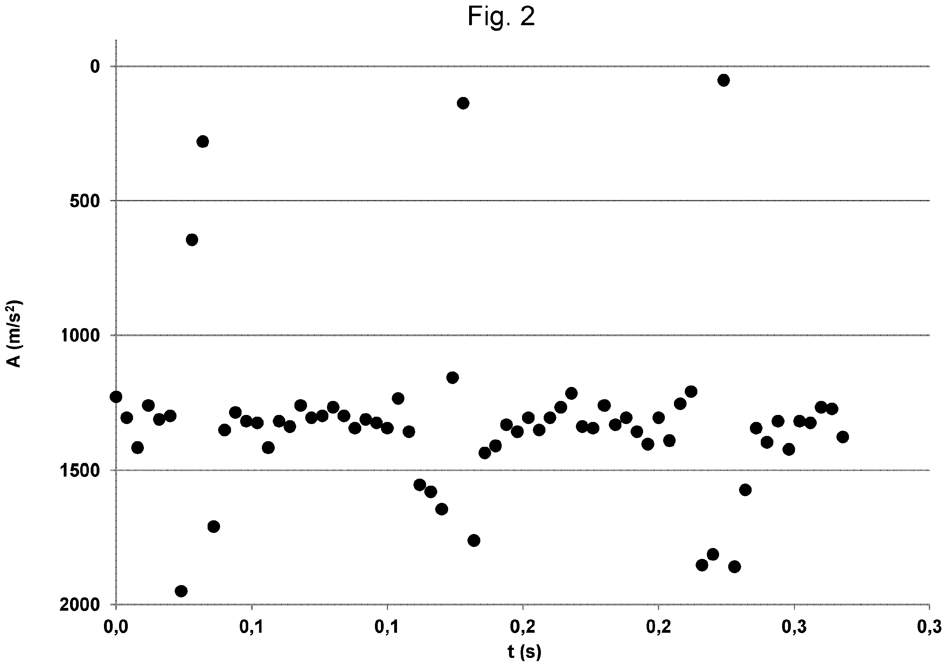

An example of an output of the radial acceleration values measured with this kind of sensors is plot in fig. 2 to which reference is now made. As for the example of fig. 1, three consecutive tire rotations of a tire fitted on a vehicle have been tracked at a vehicle speed of 80 km/h. The only difference with respect to the example of fig. 1, is that fig. 2 was obtained with a sampling frequency of the radial acceleration of 250 Hz, i.e. twenty times smaller than 5 kHz of the previous example shown in fig. 1.

Since the sampling frequency of 250 Hz is much lower than the Nyquist frequency associated with the variation of radial acceleration corresponding to the passages of the monitoring unit in the contact area, the resulting acceleration profile in the example of fig. 2 is strongly undersampled and consequently, due to the very few sampling points available, it is impossible to perform a precise tracking of the tire monitoring unit in its approaching, entering, remaining in correspondence, and exiting the contact area, i.e. it is impossible to directly determine the length of the contact area.

However, the Applicant realized that even in such extremely undersampled acceleration profile some information still remains related to the accelerometric signal, (i.e. the signal that would be obtained by a high frequency sampling), and in particular some, very partial information remains related to passages of the monitoring unit in correspondence of the contact area over many tire rotations.

It is in fact recalled here that while the monitoring unit remains in correspondence of the contact area, the radial acceleration is substantially zero since the monitoring unit is locally moving on a substantially rectilinear path; this means that, in the example shown in fig. 2, sampling points whose value lay in proximity of, or relatively close to, zero radial acceleration can be considered as being representative of the monitoring unit being in correspondence of the contact area at that sampling time.

In the remainder of the description and in the claims, sampling points being representative of the monitoring unit being in correspondence of the contact area will be referred to as *"contact area points"*.

The Applicant further understood that the above mentioned very partial information, which is unusable over a single or few tire rotations, could "build up" over many tire rotations, so as to be used to reconstruct a curve resembling the accelerometric signal that would be obtained by a high frequency sampling.

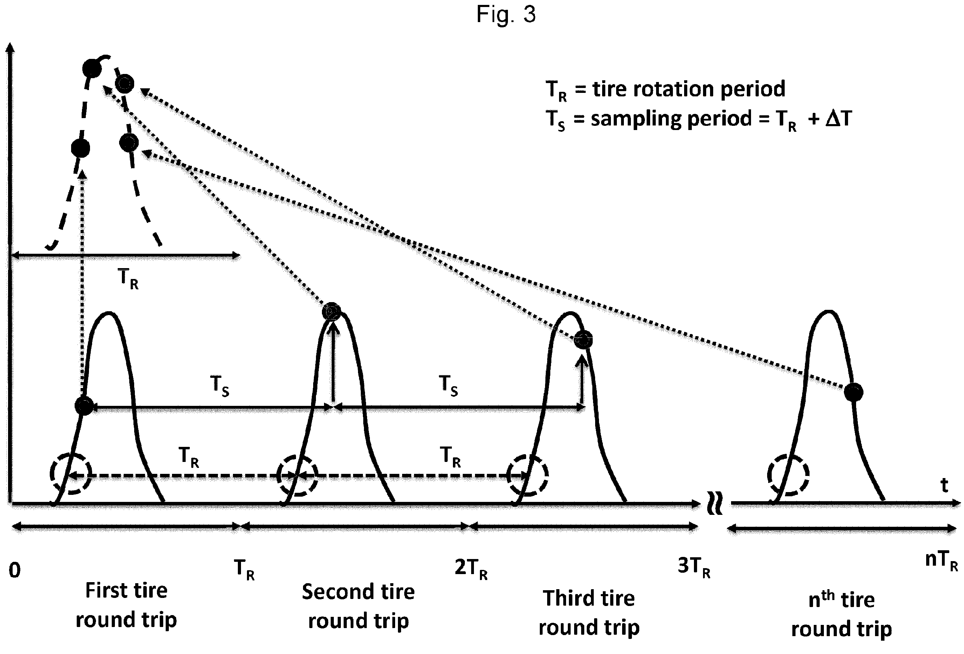

To further illustrate this Applicant's intuition, reference is now made to fig. 3 wherein it is depicted a conceptual sketch of an (analog) accelerometric signal obtainable over n tire rotations, assuming a constant tire rotation period $T_R$.

Under those conditions, the accelerometric signal exhibits a periodic behaviour, repeating itself along many tire rotations.

In fig. 3 a low frequency sampling is envisaged, in which the sampling period $T_S$ differs from the tire rotation period $T_R$ of an amount $\Delta T$, so that in each rotation of said tire a different portion of the accelerometric signal is sampled. This first scenario is shown by the solid circles in fig. 3.

On the other hand if $\Delta T$ was strictly zero so that $T_R \equiv T_S$, substantially the same portion of the accelerometric signal will be sampled at any tire rotation. This second scenario is shown by the dashed circles in fig. 3.

Driven by the observation of fig. 3, the Applicant realized that since each sampling point (or group of sampling points) carries information relatable, in each tire rotation, to a respective portion of the accelerometric signal, the plurality of sampling points, (or part of them), obtained by a low frequency sampling over many tire rotations could be assembled together in a predetermined time slot, or angular slot, in order to reconstruct a curve resembling an accelerometric signal that would be obtained by a high frequency sampling.

Consequently, said curve would resemble the variation of the radial acceleration over said predetermined time slot, or angular slot.

The assembling of the plurality of sampling points obtained over many tire rotations, it is conceptually shown in fig. 3, wherein at each sampling point is assigned a position in a predetermined time slot (corresponding to a rotation period $T_R$ in fig.3), taking into account the sampling period $T_S$ and the tire rotation period $T_R$.

In other words the Applicant understood that from said plurality of sampling points obtained over many tire rotations, it could be possible to reconstruct a curve resembling the accelerometric signal that would be obtained by a high frequency sampling, by advantageously using the sampling frequency $\omega_S$ differing from the tire rotation frequency $\omega_R$, and by advantageously using the fact that the accelerometric signal to be sampled exhibits a periodic, (or quasi periodic), behaviour, repeating itself along many tire rotations.

The sampling frequency $\omega_S$ can be related to a tire rotation frequency by the following formula:

$$\omega_S = N\,\omega_R +/-\, \Delta\omega \qquad (N \geq 1,\ |\Delta\omega| > 0)$$

wherein N is a positive integer number greater than, or equal to, 1 and $\Delta\omega$ is a frequency difference between the sampling frequency $\omega_S$ and an integer multiple of the rotation frequency $N\omega_R$.

The expression "assembling" is herein used to indicate a collection of sampling points obtained over many tire rotations and a recasting of all, or part of them, in the same time slot, or angular slot, with a reordering which, as in the example of fig. 3, can be based on the sampling period or frequency and on the tire rotation period or frequency.

The Applicant surprisingly found that this reconstruction of a curve using sampling points obtained over multiple tire rotations leads to a substantially precise estimation of an accelerometric signal that would be obtained by a high frequency sampling.

Once the reconstructed accelerometric curve has been obtained, the Applicant has found that any of the methods to derive the length of the contact area, the load acting on a tire or any other useful tire parameter could be applied to said reconstructed curve, leading to substantially the same result obtainable with sampling at high frequency. This will be experimentally shown in the description of exemplary embodiments of this invention.

The Applicant has thus found that it is advantageously possible to perform tire monitoring using less expensive monitoring units, with a low degree of hardware/software complexity, operated at low frequency and with low power needs.

It is worthy to anticipate here that the assumption of constant speed, which has been adopted so far only for the sake of explaining the Applicant's intuition with reference to fig. 3, can be relaxed, and the method previously described can be generalized also to embodiments wherein the vehicle speed (and consequently the tire rotation period or frequency) varies over the measurement amount of time.

In those cases, the assembling of said plurality of sampling points to reconstruct a curve estimating an accelerometric signal can carried out by assigning at each sampling point a time position in said predetermined time slot (or angular slot), taking into account the sampling period or frequency, an initial value of the tire rotation period or frequency, and the variation along said amount of time of said tire rotation period or frequency.

Furthermore, the assembling method previously described can be generalized to embodiments wherein also the sampling period or frequency varies over the measurement amount of time, for example the sampling period, or frequency, can be adjusted in response to a change in the tire rotation frequency over the measurement amount of time.

In a first aspect, the invention concerns a method for monitoring a tire.

The method comprises associating a monitoring unit to said tire. The monitoring unit comprising at least one sensing element adapted to measure at least one quantity descriptive of deformations of said tire.

The method further comprises fitting said tire to a wheel of a vehicle and operating said vehicle so as to cause rotation of said tire on a rolling surface at a tire rotation frequency $\omega_R$. Due to said fitting and operating said tire is deformed so as to form a contact area between said tire and said rolling surface.

During the rotation of said tire, said quantity is measured at a sampling frequency $\omega_S$ for an amount of time extending over multiple tire rotations, so as to obtain a plurality of sampling points comprising contact area points representative of passages of said monitoring unit in correspondence of said contact area over said multiple tire rotations, wherein said sampling frequency $\omega_S$ differs from an integer multiple of a tire rotation frequency $N\omega_R$ and wherein N is a positive integer number greater than, or equal to, one;

The method further comprises assembling in a predetermined time slot, or angular slot, said plurality of sampling points so as to reconstruct a curve estimating a variation of said quantity at least at said contact area in a single rotation of said tire.

The method further comprises estimating at least one parameter related to said tire based on said curve. In such a way, the monitoring of said tire can be performed based on said at least one estimated parameter related to said tire.

In a second aspect, the invention concerns a method for controlling a vehicle having at least one tire fitted thereon, comprising:

- estimating at least one parameter related to said tire by the above method for monitoring a tire;

- communicating said at least one parameter related to said tire to a vehicle control system;

- adjusting at least one vehicle control parameter by said vehicle control system based on said estimated parameter related to said tire.

Alternatively, said one tire related parameter can be communicated to the driver, for example by providing an audible and/or a visible alert, e.g on the vehicle dashboard or on a mobile personal device of the vehicle driver, such as a smartphone or a tablet.

In a third aspect, the invention concerns a system for monitoring a tire of a vehicle, the system comprising a monitoring unit adapted to be associated with said tire.

The monitoring unit comprises at least one sensing element adapted to measure at least one quantity descriptive of deformations of said tire.

The system further comprises at least one processing unit comprising software modules being adapted to estimate at least one parameter related to said tire when said tire is fitted to a wheel of a vehicle and said vehicle is operated so as to cause rotation of said tire on a rolling surface. Due to said fitting and operating said tire is deformed so as to form a contact area between said tire and said rolling surface.

The software modules of the system are adapted to measure said quantity during tire rotation at a sampling frequency $\omega_S$ for an amount of time extending over multiple tire rotations, so as to obtain a plurality of sampling points comprising contact area points representative of passages of said monitoring unit in correspondence of said contact area, wherein said sampling frequency $\omega_S$ differs from an integer multiple of a tire rotation frequency $N\omega_R$, and wherein N is a positive integer number greater than, or equal to, one.

The software modules of the system are also adapted to assemble in a predetermined time slot, or angular slot, said plurality of sampling points so as to reconstruct a curve estimating the variation of said quantity at least at said contact area in a single rotation of said tire;

The software modules are also adapted to estimate said at least one parameter related to said tire based on said curve.

The software modules are also preferably adapted to provide said at least one estimated parameter related to said tire to at least one interface to a control system configured to perform the monitoring of said tire based on said at least one estimated parameter related to said tire.

At least some of the above mentioned software modules can be implemented (e.g. as firmware modules) in a processing unit comprised within the monitoring unit. The software modules adapted to estimate the at least one parameter related to said tire can be implemented in a controlling unit installed or to be installed externally of the tire, e.g. on the vehicle and/or on a personal device of the vehicle driver (e.g. a smartphone or other portable device).

In a fourth aspect, the invention concerns a vehicle having at least one tire fitted thereon, comprising a system for monitoring said at least one tire comprising a monitoring unit as described above, and a vehicle control system being adapted to control said vehicle.

Preferably the monitoring unit comprises a transmitting unit adapted for communication of data outside of said at least one tire. Such data may comprise at least said plurality of sampling points and/or said curve and/or the estimated parameter related to said tire. Preferably the system for monitoring said tire is adapted to communicate said estimated parameter related to said tire to said vehicle control system. The vehicle control system is adapted to adjust at least one vehicle control parameter based on said estimated parameter related to said tire.

The system for monitoring the tire and the vehicle control system can be implemented in fully separate devices being in communication with each other, e.g. with a controlling unit being in wireless communication with the monitoring unit placed within the tire and also being in communication (via wireless communication, or using a communication bus available on the vehicle, such as a CAN bus) with the vehicle control system.

However, they can also be implemented at least partially in the same device, such as for example in a board computer of the vehicle being (wirelessly) in communication with the monitoring unit placed within the tire.

In one or more of the above aspects, the present invention may comprise one or more of the following preferred features.

Said sampling frequency can be selected depending on the hardware and/or software available and the actual control on the frequency settings allowed by the said available hardware and/or software.

Preferably, said sampling frequency $\omega_S$ is lower than, or equal to, than 1 kHz. In this way power consumption during sampling is reduced.

Preferably, said sampling frequency $\omega_s$ is greater than, or equal to, 1 Hz, preferably greater than, or equal to, 20 Hz. In this way too long measurements are avoided.

In another preferred embodiment, said sampling frequency $\omega_S$ is greater than, or equal to, 100 Hz and lower than, or equal to, 750 Hz, preferably said sampling frequency $\omega_S$ is greater than, or equal to, 150 Hz and lower than, or equal to, 500 Hz. Exemplarily said sampling frequency $\omega_S$ can be about 250 Hz.

In this way an optimal trade-off can be achieved among several constraints: duration of the measurement, power consumption during sampling and power consumption during data transmission from the monitoring unit to the control unit and viceversa.

As previously discussed, the disclosed reconstruction of a curve resembling an accelerometric signal is based on a low frequency sampling.

Low frequency, to the purposes of the present invention, is understood as a frequency low enough which does not allow a precise tracking of the monitoring unit in its entering, remaining in correspondence and exiting the contact area due to the few sampling points available, thus resulting in an undersampled, or strongly undersampled, accelerometric profile to which the previously discussed curve reconstruction method is applied in order to reconstruct a curve resembling the signal the would be obtained using a high frequency sampling.

In a preferred embodiment, said low sampling frequency $\omega_S$ is selected so that a maximum of four contact area points, i.e. sampling points representative of passages of the monitoring unit in correspondence of the contact area, are present on average per tire rotation in the measurement of said quantity during said amount of time, for a vehicle speed up to 100 km/h. In this way power consumption during sampling is reduced.

In another preferred embodiment, said sampling frequency $\omega_S$ is selected in order to obtain that at least an average of 0.5 contact area points are present per tire rotation in the measurement of said quantity during said amount of time, for a vehicle speed up to 100 km/h.

The Applicant has verified that in this way a possible variation of the tire rotation frequency during the amount of time in which the measurement is carried out can be more easily obtained from said plurality of sampling points.

In preferred embodiments, said sampling frequency $\omega_S$ is selected so as to have an average number comprised between one and two contact area points per tire rotation, during the measurement of said quantity over said amount of time, for a vehicle speed up to 100 km/h.

As previously discussed, the herein disclosed method for reconstruction of a curve resembling an accelerometric signal is based on a sampling in which the sampling frequency $\omega_S$ differs from the tire rotation frequency $\omega_R$ or from an integer multiple of a tire rotation frequency $N\omega_R$.

Based on a frequency difference $\Delta\omega$ a desired effective sampling frequency $\omega_{EFF}$ can be achieved, wherein the effective sampling frequency $\omega_{EFF}$ is defined according to the following formula:

$$\omega_{EFF} = (\omega_s \omega_R) / |\Delta\omega|$$

The lower $\Delta\omega$ the higher the effective sampling frequency $\omega_{EFF}$ and the longer the amount of time needed to carry out the measurements of the sampling points to be assembled in a reconstructed curve resembling said acceleration signal.

In a practical embodiment the effective sampling frequency $\omega_{EFF}$ depends on the actual signal to be reconstructed. The frequency difference $\Delta\omega$ can be set up to a certain precision level depending on the hardware and/or software available, and/or on the actual control on the frequency settings allowed by the said available hardware and/or software.

In a preferred embodiment, said effective sampling frequency $\omega_{EFF}$ is higher than, or equal to, 50 Hz and lower than, or equal to, 20 kHz, more preferably said effective sampling frequency $\omega_{EFF}$ is higher than, or equal to, 350 Hz and lower than, or equal to, 5 kHz, even more preferably said effective sampling frequency $\omega_{EFF}$ is higher than, or equal to, 500 Hz and lower than, or equal to, 1.5 kHz.

In this way an optimal trade-off is achieved between power consumption during sampling and the requested accuracy of the measurement.

In other embodiments the effective sampling frequency $\omega_{EFF}$ can be selected based on the Nyquist frequency of the accelerometric signal to be sampled along said amount of time. This can be done since the Nyquist frequency range of the accelerometric signal to be sampled is in general known as previously discussed.

In a preferred embodiment, said effective sampling frequency $\omega_{EFF}$ is higher than, or equal to, twice the Nyquist frequency of the accelerometric signal to be sampled along said amount of time.

In this way the precision of the reconstruction method can be further increased.

In another preferred embodiment, said effective sampling frequency $\omega_{EFF}$ is lower than, or equal to, the Nyquist frequency of the accelerometric signal to be sampled along said amount of time.

In this way the tolerances on the setting of the sampling frequency $\omega_S$ are increased and monitoring units with a low degree of hardware and/or software can be advantageously used.

In another preferred embodiment, said effective sampling frequency $\omega_{EFF}$ is comprised between about the Nyquist frequency and twice the Nyquist frequency of the accelerometric signal to be sampled along said amount of time.

In this way an optimal trade-off is achieved between power consumption during sampling and the accuracy of the measurement.

In a preferred embodiment said sampling frequency $\omega_S$ differs from an integer multiple of a tire rotation frequency $N\omega_R$, within said amount of time, by an amount $\Delta\omega$, wherein $\Delta\omega$ is greater than about 0.1 % of $N\omega_R$ (for any value of N greater or equal to 1).

In this way the effective sampling frequency $\omega_{EFF}$ does not reach too high values, thus disadvantageously increasing the duration of said amount of time needed to obtain the plurality of sampling points which can be used to reconstruct a proper curve.

In another preferred embodiment said sampling frequency $\omega_S$ differs from an integer multiple of a tire rotation frequency $N\omega_R$, within said amount of time, by an amount $\Delta\omega$, wherein $\Delta\omega$ is lower than about 35% of $N\omega_R$, preferably lower than about 25% of $N\omega_R$, even more preferably lower than about 15% of $N\omega_R$ (for any value of N greater or equal to 1).

In this way the effective sampling frequency $\omega_{EFF}$ does not reach too low values, thus disadvantageously decreasing the precision of the reconstructed curve.

In preferred embodiments, said sampling frequency $\omega_S$ differs from an integer multiple of a tire rotation frequency $N\omega_R$, within said amount of time, by an amount $\Delta\omega$, wherein $\Delta\omega$ is comprised between about 0.5 % of $N\omega_R$ and 10% of $N\omega_R$ (for any value of N greater or equal to 1).

Preferably said predetermined time slot corresponds to the time duration of a tire rotation, preferably said tire rotation being the first tire rotation occurring in said amount of time.

In this way the reconstructed curve can be directly correlated to the variation of said quantity representative of tire deformation over a tire rotation, even the first tire rotation of said amount of time.

In another preferred embodiment said sampling frequency $\omega_S$ differs from an integer multiple of a tire rotation frequency $N\omega_R$ (for any value of N greater or equal to 1) during at least 20% of said amount of time, preferably during at least 50% of said amount of time, even more preferably during at least 80% of said amount of time.

As previously underlined the curve reconstruction is enabled by said sampling frequency $\omega_S$ differing from an integer multiple of a tire rotation frequency $N\omega_R$ over said amount of time in which said plurality of sampling points is obtained; however, even if is desirable that such difference is maintained over the entire duration of said amount of time, the assembling method previously disclosed is robust, and provides reliable results, even if said frequency difference holds for a substantial fraction of said amount of time in which said plurality of sampling points is obtained.

Decreasing said fraction could, at most, lead to an increase of the amount of time necessary to obtain said plurality of sampling points without hindering the possibility of reconstructing said curve.

Preferably said assembling is carried out by assigning at each sampling point a time position in said predetermined time slot, or an angular position in said predetermined angular slot, based on said sampling frequency $\omega_S$ and on said tire rotation frequency $\omega_R$.

Preferably said time position, or angular position, is based on a time variation along said amount of time of said tire rotation frequency $\omega_R$, and preferably on an initial value of said tire rotation frequency $\omega_R$, preferably at the starting of said amount of time.

In this way variation of the vehicle speed, and consequently the tire rotation frequency $\omega_R$, during said amount of time are better taken into account.

Preferably said time variation of said tire rotation frequency $\omega_R$ along said amount of time is obtained from said plurality of sampling points, preferably based on said contact area points. In this way hardware/software complexity can be reduced and battery can be saved (with the further advantage that preferably the curve reconstruction can be entirely carried out by said monitoring unit of a tire). Preferably said time variation of said tire rotation frequency $\omega_R$ can be estimated based on the time difference between two consecutive passages of said monitoring unit in correspondence of said contact area, i.e. based on the time difference between contact area points belonging to consecutive tire rotations.

In another preferred embodiment, said time variation of said tire rotation frequency $\omega_R$ along said amount of time is obtained from ABS data of said vehicle.

In this way the variation of the tire rotation frequency along said amount of time, and preferably its initial value, can be obtained even when the sampling frequency is loo low to obtain the variation of said tire rotation frequency, and/or the initial value of the latter, from said plurality of sampling points.

In another preferred embodiment, the method of this invention further comprises communicating to said monitoring unit said time variation of said tire rotation frequency $\omega_R$ along said amount of time, and preferably its initial value.

Depending on the complexity of the available hardware and/or software, the setting of the sampling frequency, or at least its initial value in the case a variation of the sampling frequency over said amount of time was envisaged, can be advantageously either carried out by the monitoring unit itself or can be communicated to the monitoring unit by a controlling unit external to said tire.

In the first case, corresponding to one preferred embodiment, said tire monitoring method further comprises communicating to the monitoring unit the initial values of said tire rotation frequency $\omega_R$ and of said sampling frequency $\omega_S$ from a controlling unit external to said tire.

Alternatively in another preferred embodiment said tire monitoring method further comprises:

- communicating to the monitoring unit the initial value of said tire rotation frequency $\omega_R$ from a controlling unit external to said tire.
- setting by the monitoring unit said sampling frequency $\omega_S$ based on said initial value of said tire rotation frequency $\omega_R$ communicated from said controlling unit external to said tire.

In a preferred embodiment, the assembling of the sampling points is carried out during the measurement of said quantity along said amount of time.

In this way a quicker curve reconstruction is achieved.

On the other hand, in an alternative preferred embodiment said assembling can be carried out after the expiring of said amount of time.

In this way, by managing said curve reconstruction as a post processing operation, (i.e. by carrying out the same after the expiring of said amount of time) a power consumption is reduced by removing the need of a continuous data transmission during said amount of time.

Preferably said assembling is carried out by said monitoring unit.

In this way battery power of the monitoring unit can be saved due to a decreased data transmission need.

In another embodiment, said plurality of sampling points is communicated by said monitoring unit to a controlling unit external to said tire. Preferably said assembling is carried out by said controlling unit.

This is particularly convenient for those monitoring units with a low degree of hardware complexity comprising a minimal amount of hardware necessary to carry out a measurement of the quantity descriptive of tire deformations. In such cases, part of the processing can be carried out in a processing unit of the controlling unit external to said tire, to which data are transm itted.

In a preferred embodiment, the estimation of at least one parameter related to said tire based on the reconstructed curve is carried out in said controlling unit external to said tire. This is also particularly convenient for those monitoring units with a low degree of hardware complexity comprising a minimal amount of hardware necessary to carry out a measurement of the quantity descriptive of tire deformations.

In another preferred embodiment, said estimation of at least one parameter related to said tire from based on the reconstructed curve is carried out in said monitoring unit associated with said tire.

In this way data transmission is minimized since only the output of the calculation (typically a number) carried out by the monitoring unit is transmitted external to said tire, i.e. to the controlling unit.

In a preferred embodiment, said integer number N is lower than, or equal to, 250, preferably said integer number N is lower than, or equal to 150, even more preferably said integer number N is lower than, or equal to 125.

In this way power consumption during sampling is reduced.

In a preferred embodiment, said integer number N is greater than, or equal to, 15 and lower than, or equal to, than 100, preferably said integer number N is greater than, or equal to, 25 and lower than, or equal to, 60.

In this way an optimal trade-off is achieved among several constraints: duration of the measurement, power consumption during sampling and/or power consumption during data transmission from the monitoring unit to the control unit and viceversa.

In another embodiment, said integer number N is greater or equal to two, and at least one further curve is assembled from said plurality of sampling points, preferably M curves are assembled from said plurality of sampling points, wherein M is lower than, or equal to, N. Preferably an average curve is obtained based on an averaging of said M curves.

In this way a parallel reconstruction of up to N different curves can be carried out simultaneously and the precision of the disclosed method can be further increased.

In another embodiment, said integer number N is greater than, or equal to, two and M reconstructed curves are assembled from said plurality of sampling points, wherein M is lower than, or equal to, N and wherein the first points of each one of said M curves correspond to the first M sampled points of said plurality of sampling points obtained over said amount of time.

For example in the case of N = 2, two curves can be assembled from said plurality of sampling points, the first one of said two reconstructed curves can be obtained from *even sampling points* of said plurality of sampling points, while the second one of said two reconstructed curves can be obtained from *odd sampling points* of said plurality of sampling points.

In the above example *"odd sampling points"* are defined as sampling points associated to odd positions within said plurality of sampling points, e.g. the first sampling point, the third sampling point and so on, while *"even sampling points"* are defined as sampling points associated to even positions within said plurality of sampling points, e.g. the second sampling point, the fourth sampling point and so on.

The above definitions can be generalized for any N greater than two.

The Applicant has also found that power consumption of the monitoring unit during sampling can be further optimized by interrupting the measurement of said quantity during a switch off time so as to further decrease power consumption and increase battery lifetime.

This is feasible by determining a number of "virtual" measurements, that should be performed during said switch off time, but that are actually not performed, which can be estimated based on the sampling frequency and the switch off time, for example as the product of said sampling frequency and said switch off time.

In other words said plurality of sampling points, to be assembled in a reconstructed curve, will comprise both samples corresponding to actual measurements and virtual samples corresponding to virtual measurements.

The duration of the switch off time is lower than the amount of time used for the whole measurement, and may be selected in a way such that an actual measurement performed during the switch off time would include only sampling points representative of the passage of said monitoring unit outside the contact area.

Preferably said switch off time can be set in the range between one third and three quarters of the tire rotation period.

In preferred embodiments, the measurement of the physical quantity descriptive of the tire's deformations can be interrupted after at least one occurrence of a measurement related with a passage of said monitoring unit in correspondence of said contact area.

The measurement of said quantity is then started again after the switch off time.

In a more preferred embodiment, the interruption of the measurement of said quantity may be triggered by the occurrence of a measurement representative of a passage of said monitoring unit in correspondence of said contact area (i.e. by the occurrence of a contact area point) and a consecutive measurement representative of a passage of said monitoring unit outside said contact area.

In this way the chances of including contact area points (i.e. sampling points representative of passages of said monitoring unit in correspondence of said contact area) within said switch off time are reduced.

In another preferred embodiment said switch off time can be adjusted in response to variations of a rotation speed of said tire.

In this way power consumption can be further optimized and the chances of contact area points within said switch off time can be further reduced.

As previously discussed, the variation of the tire rotation speed can be communicated to the monitoring unit by a controlling unit external to the tire or can be detected by the monitoring unit itself, for example based on the time difference between two consecutive passages of said monitoring unit in correspondence of said contact area.

In preferred embodiments, the determination of whether the measured quantity descriptive of the tire's deformations has a value representative of a passage of said monitoring unit in correspondence of the contact area is, (i.e. the determination of whether a sampling point is a contact area point), is performed by defining a threshold value and comparing the value of said measured quantity with said threshold value.

For example in the case of a radial acceleration profile the threshold value can be set as $V^2/(2R)$, wherein V is the vehicle speed and R is a tire radius.

In other words, it is possible to consider as contact area points only those sampling points whose absolute value of radial acceleration is lower than one half of the centripetal/centrifugal acceleration to which the monitoring unit is subjected during rotation outside the contact area.

In a further preferred embodiment, the threshold can be set to an initial value before starting the measurement of said quantity, and then can be adjusted, for example in response to variations of the rotation speed of said tire.

It is understood that if other quantities descriptive of the tire deformation are used instead of radial acceleration, threshold value and comparison criteria (value lower or higher than the threshold) can vary accordingly.

The Applicant has further noticed that the present invention leads to a more precise outcome if it is carried out in a way that during the measurement the kinematic and/or dynamic conditions acting on a tire do not undergo a substantial variation. In other words, in preferred embodiments the measurement is performed in static or quasi static running conditions.

In more detail, in preferred embodiments, the measurement of the quantity descriptive of tire deformations is started when at least one of the following access conditions is met:

- a speed of said vehicle is comprised within a predetermined speed range, preferably within about 40 km/h and about 100 km/h, more preferably within about 60 km/h and about 80 km/h;
- an absolute value of longitudinal acceleration (i.e. the acceleration in the same direction of motion of the vehicle) of said vehicle is lower than a predetermined amount, preferably below about 1 m/s$^2$.

In more preferred embodiments, a further access condition to be met may be provided, by which an absolute value of lateral acceleration (i.e. the acceleration in a direction perpendicular to the direction of motion of the vehicle) of said vehicle is lower than a predetermined amount, preferably below about 0.5 m/s$^2$.

In another preferred embodiments, the present invention further comprises stopping the measurement of the quantity descriptive of tire deformations when said amount of time exceeds a predetermined maximum amount of time, preferably said predetermined maximum amount of time is comprised between 1 and 60 seconds, more preferably said predetermined maximum amount of time is comprised between 2 and 30 seconds.

In this way it is possible to envisage a monitoring of the tire related parameter in a fast and simple way.

Further stopping conditions may be defined, for example to track that the kinematic or dynamic conditions are changing, or have changed, to an extent not compatible with the accuracy requested by the vehicle control system.

For example, in preferred embodiments, the present invention further comprises stopping the measurement of said quantity when at least one of the following stopping conditions is met:

- an absolute value of longitudinal acceleration of said vehicle exceeds a predetermined acceleration threshold, preferably about 1 m/s$^2$;

- a speed of said vehicle is outside a predetermined speed range, preferably below about 40 km/h or preferably above about 100 km/h.

A further stopping condition to be met may be provided, by which an absolute value of lateral acceleration of said vehicle is higher than a predetermined amount, preferably the absolute value of lateral acceleration of said vehicle is higher than about 0.5 m/s$^2$.

In further embodiments, one or more of the above stopping conditions may be used to discard at least one subset of performed measurements.

For example, the measurements can be performed by the monitoring unit in a predefined amount of time, and if it is evaluated that during said predefined amount of time one or more of the above stopping conditions have been met, the whole set of measurements is discarded and the tire related parameter or parameters is/are not estimated.

In a preferred embodiment, said quantity descriptive of the tire deformation is a radial acceleration. Alternative quantities could be the tangential acceleration, and/or the radial and/or tangential deformation.

In preferred embodiments, the monitoring unit is secured to a crown portion of said tire, more preferably to an inner surface of the tire.

In preferred embodiments, the monitoring unit comprises at least one sensing element adapted to measure at least a radial and/or tangential acceleration of said crown portion during rotation of said tire.

Securing said monitoring unit to a crown portion of a tire, close to, or even embedded in, the tire tread, is advantageous since it is easier to measure a quantity descriptive of tire deformations, and thus more precisely identifying the occurrences of passages of the monitoring unit in correspondence of the tire contact area.

As previously noticed, among tire's parameter to be monitored during tire rolling, the length of the contact area is one of the most challenging to be estimated and at the same time it is one of the most useful since it may be used in the determination other tire related parameters, such as the load exerted by the vehicle on a tire.

Preferably said at least one parameter to be monitored related to said tire is a length of said contact area during rotation (PL).

The Applicant has in fact found that the invention herein described is particularly suitable for the estimation of a length of the tire contact area, by using the curve reconstruction method previously described.

As already pointed out, once the reconstructed accelerometric signal (i.e. the reconstructed curve) has been obtained, any of the methods already known in prior art to derive the length of the contact area and, consequently, the load acting on a tire, could be applied to said reconstructed signal, leading to substantially the same result than by starting with a signal directly obtained by sampling at high frequency.

For example the length of the tire contact area (PL) can be calculated as a ratio between the width of said reconstructed curve and the duration of a tire rotation, wherein said duration of a tire rotation can be for example estimated based on the time distance between consecutive peaks (or alternatively between the time distance of *contact area point*).

Alternatively the length of the tire contact area (PL) can be calculated by performing an Fourier Transform of the reconstructed curve and by identifying relevant points, (or by any suitable interpolation), of the Fourier spectrum of the reconstructed curve.

The above mentioned method to estimate the length of the tire contact area (PL) will be hereinafter defined as *"FFT method"* and as such will be addressed in the following.

Preferably said monitoring unit comprises at least one further sensing element adapted to measure a tire pressure and/or a tire temperature.

Depending on the tire related parameter to be estimated, it could be convenient to include pressure and/or temperature sensing elements within the monitoring unit to minimize hardware complexity and/or eliminates the need of communication between a plurality of monitoring units secured to different portions of the tire or to the wheel.

As previously underlined, the present invention can be used to estimate different parameters related to a tire. In a preferred embodiment, said at least one parameter related to said tire is a load exerted on said tire by said vehicle.

Preferably said load is estimated based on said length (PL) and said tire pressure.

For example, the load Fz exerted by the vehicle on the tire can be calculated from the length of the contact area based on a polynomial fitting function of the contact length, e.g. by using one of the following formulas

$$Fz = A(P) + B(P) * PL ,$$

or,

$$Fz = A(P) + B(P) * PL + C(P) * PL^2$$

wherein P is the tire pressure, PL is the length of the contact area and A, B, C are calibration parameters depending on the tire pressure P, whose values can be obtained by a calibration performed for the tire model to which the monitoring unit is to be associated.

Calibration can be performed by using conventional testing machines on which a tire inflated at a controlled pressure and temperature is rotated over a conveyor belt under controlled conditions of exerted load and rotation speed.

In a more preferred embodiment, the load Fz exerted by the vehicle on the tire can be more precisely calculated from the contact area length (PL) based on a polynomial function of the contact length (PL) wherein the coefficients of said polynomial function further depend on tire pressure, temperature and rotation speed, e.g. according to one of the following formulas:

$$Fz = A(P,\omega, T) + B(P,\omega,T) * PL ,$$

or

$$Fz = A(P,\omega,T) + B(P,\omega,T) * PL + C(P,\omega,T) * PL^2$$

wherein P is the tire pressure, T is the tire temperature, PL is the length of the contact area, $\omega$ is the tire rotation speed and A(P,$\omega$,T), B(P,$\omega$,T), C(P,$\omega$,T) are calibration parameters depending on the tire pressure, tire rotation speed and tire temperature.

The monitoring unit can comprise a transmitting and/or a receiving section to communicate with a controlling unit external to said tire.

The outcome of the measurement results and/or the estimated tire related parameters can be communicated by the monitoring unit to the controlling unit. Those data may be then communicated to devices on board the vehicle, so that all the detected information can be provided to the driver and/or vehicle control systems.

Tire related information may also be transmitted outside the vehicle, e.g. to one or more driver's personal devices or remote servers (e.g. cloud servers).

As previously discussed, the at least one estimated tire related parameter can be used by the vehicle control system to adjust at least one vehicle control parameter.

As an example, the vehicle control system may comprise a brake control system, and said adjusting at least one vehicle control parameter may comprise adjusting a braking force on said tire (e.g. based on the estimated length of the contact area or based on the estimated load).

Alternatively or in combination, the vehicle control system may comprise a steering control system, and said adjusting at least one vehicle control parameter may comprise selecting a maximum variation allowed from steering commands (e.g. based on the estimated length of the contact area or based on the estimated load).

Alternatively or in combination, the vehicle control system may comprise a suspension control system, and said adjusting at least one vehicle control parameter may comprise adjusting a stiffness of a suspension spring associated to said tire (e.g. based on the estimated load).

Alternatively or in combination, the vehicle control system may comprise an evaluator of a vehicle range, i.e. a residual mileage available to the vehicle (e.g. based on an available fuel and/or on an available battery power in an electrically driven vehicle), and said adjusting at least one vehicle control parameter may comprise adjusting said residual mileage (e.g. based on the estimated load).

Alternatively or in combination, the at least one estimated tire related parameter can be communicated to the vehicle driver, for example by providing an audible and/or a visible alert, e.g. on the vehicle dashboard or on a mobile personal device of the vehicle driver, such as a smartphone or a tablet.

**Brief description of the drawings**

Additional features and advantages of the invention will be better apparent from the following description of some preferred embodiments thereof, made hereinafter for exemplifying and non limiting purposes, to be read with reference to the attached figures, in which:

- Fig. 1 shows a radial acceleration profile versus time for three consecutive tire rotations measured at 5 kHz sampling frequency.

- Fig. 2 shows radial acceleration versus time for three consecutive tire rotations measured at 250 Hz sampling frequency.

- Fig. 3 shows a conceptual sketch of a radial acceleration for n consecutive tire rotations and the assembling method of the plurality of sampling points obtained by a low frequency sampling.

- Fig. 4 shows a monitoring unit fitted into a tire.

- Fig. 5 shows a scheme of a monitoring unit.

- Fig. 6 shows a scheme of a vehicle comprising a tire monitoring system and a vehicle control system according to an embodiment of the invention.

- Fig. 7 shows a scheme of a controlling unit according to an embodiment of the invention.

- Fig 8 shows a scheme of a controlling unit according to another embodiment of the invention.

- Fig 9 shows a plurality of about 500 sampling points obtained in an amount of time of 60 seconds at 8 Hz sampling frequency using a test sensorized tire.

- Fig. 10 A and B show respectively a reference 5 kHz signal (fig. 10 A) for the same sensorized tire of fig.9 and the reconstructed curve (fig 10 B ) using the sampling points shown in fig.9, wherein the reconstructed curve has been assembled in both time and angular slots.

- Fig. 11 shows a comparison between the reference signal (fig.10A) and the reconstructed curve (fig.10B), wherein the reconstructed curve is represented by solid circled points while the reference signal by a solid line.

- Fig 12 shows a plurality of about 500 sampling points obtained in an amount of time of 2 seconds at 250 Hz sampling frequency using a test sensorized tire.

- Fig. 13 A and B show respectively a reference 5 kHz signal (fig. 13 A) for the same sensorized tire of fig. 13 and the reconstructed curve (fig 13 B ) using the sampling points shown in fig.12, wherein the reconstructed curve has been assembled in both time and angular slots.

- Fig. 14 shows a comparison between the reference signal (fig.13 A) and the reconstructed curve (fig. 13 B) wherein the reconstructed curve is represented by solid circled points while the reference signal by a solid line.

- Fig 15 shows a plurality of about 350 sampling points obtained in an amount of time of 2 seconds at 170 Hz sampling frequency using a test sensorized tire.

- Fig. 16 A and B show respectively a reference 5 kHz signal (fig. 16 A) for the same sensorized tire of fig.15 and the reconstructed curve (fig. 16 B ) using the sampling points of fig.15, wherein the reconstructed curve has been assembled in both time and angular slots.

- Fig. 17 shows a comparison between the reference signal (fig.16 A) and the reconstructed curve (fig. 16 B) wherein the reconstructed curve is represented by solid circled points while the reference signal by a solid line.

- Fig 18 shows a plurality of about 500 sampling points obtained in an amount of time of 2 seconds at 250 Hz sampling frequency using a test sensorized tire.

- Fig. 19 A and B show respectively a reference 5 kHz signal (fig. 19 A) for the same sensorized tire of fig.18 and the reconstructed curve (fig. 19 B ) using the sampling points of fig.18, wherein the reconstructed curve has been assembled in both time and angular slots.

- Fig. 20 shows a comparison between the reference signal (fig.19 A) and the reconstructed curve (fig. 19 B) wherein the reconstructed curve is represented by solid circled points while the reference signal by a solid line.

- Fig 21 shows a plurality of about 1000 sampling points obtained in an amount of time of 4 seconds at 250 Hz sampling frequency, using a test sensorized tire, with increasing tire rotation speed.

- Fig. 22 A and B show respectively a reference 5 kHz signal (fig. 22 A) for the same sensorized tire of fig. 21 and the reconstructed curve (fig. 22 B ) using the sampling points of fig.21, wherein the reconstructed curve has been assembled in both time and angular slots.

- Fig. 23 shows a comparison between the reference signal (fig.22 A) and the reconstructed curve (fig. 22 B), wherein the reconstructed curve is represented by solid circled points while the reference signal by a solid line.

- Fig 24 shows a plurality of about 1000 sampling points obtained in an amount of time of 4 seconds at 250 Hz sampling frequency, using a test sensorized tire, with decreasing tire rotation speed speed.

- Fig. 25 A and B show respectively a reference 5 kHz signal (fig. 25 A) for the same sensorized tire of fig.25 and the reconstructed curve (fig. 25 B) using the sampling points of fig.24, wherein the reconstructed curve has been assembled in both time and angular slots.

- Fig. 26 shows a comparison between the reference signal (fig.25 A) and the reconstructed curve (fig. 25 B) wherein the reconstructed curve is represented by solid circled points while the reference signal by a solid line.

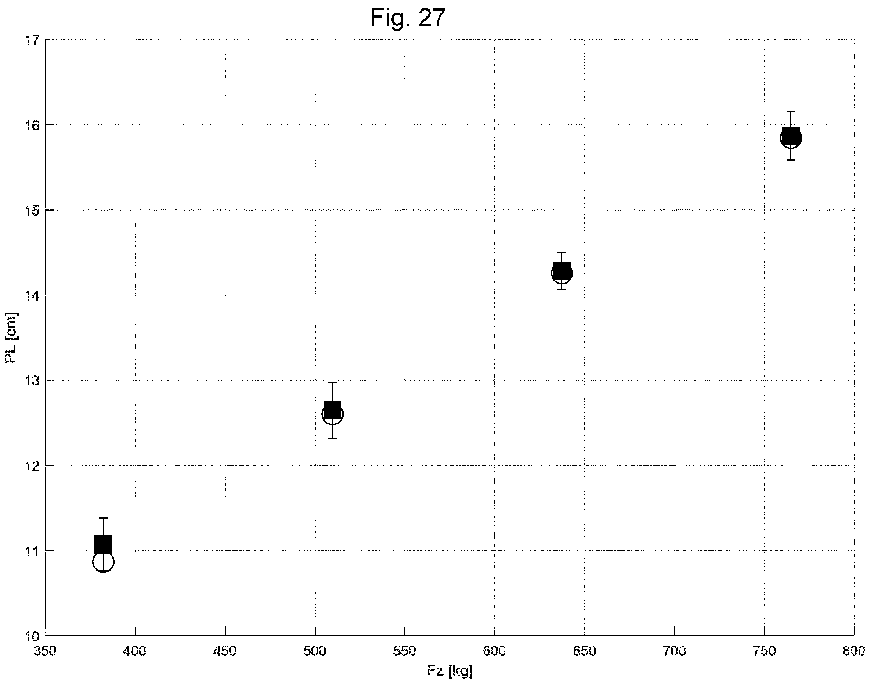

- Fig. 27 shows a comparison, performed at different tire loads, between the reference contact area lengths, ($PL_{REF}$) represented by hollow circles and contact area lengths, ($PL_{MEAS}$) represented by solid squares, calculated starting from exemplary reconstructed acceleration curves obtained by the method of the present invention. Error bars of the measured contact area lengths, $PL_{MEAS}$, are also reported while the ones of the reference contact area length, $PL_{REF}$, are negligible in the scale of fig. 27. The same *FFT method* for estimating the length of the contact area has been applied to both the reference signal and exemplary reconstructed acceleration curves obtained by the method of the present invention.

Fig. 28 is a magnification of fig 27 around a tire load of 400 kg showing both the error bars of $PL_{MEAs}$ and $PL_{REF}$. In this case ($PL_{REF}$) is represented by ha solid circle and contact area length, ($PL_{MEAS}$) is represented by a solid square.

**Detailed description of embodiments of the invention**

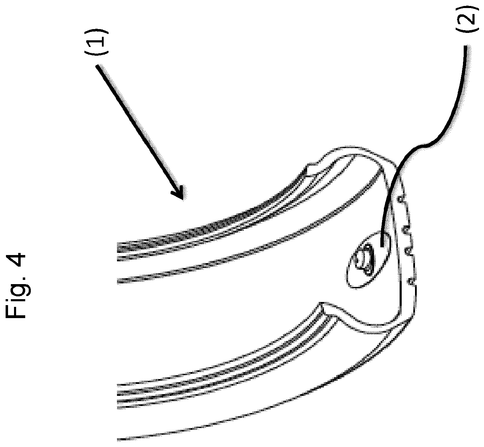

Reference is made to fig. 4 showing a portion of a tire (1) comprising a monitoring unit (2) adapted, configured to work at low sampling frequency, e.g. lower than 1 kHz.

Said monitoring unit (2) is secured to a crown portion of said tire (1), preferably substantially in correspondence of the equatorial plane of the tire. In particular, the monitoring unit (2) may be glued or connected via an adhesive tape to the inner liner of the tire.

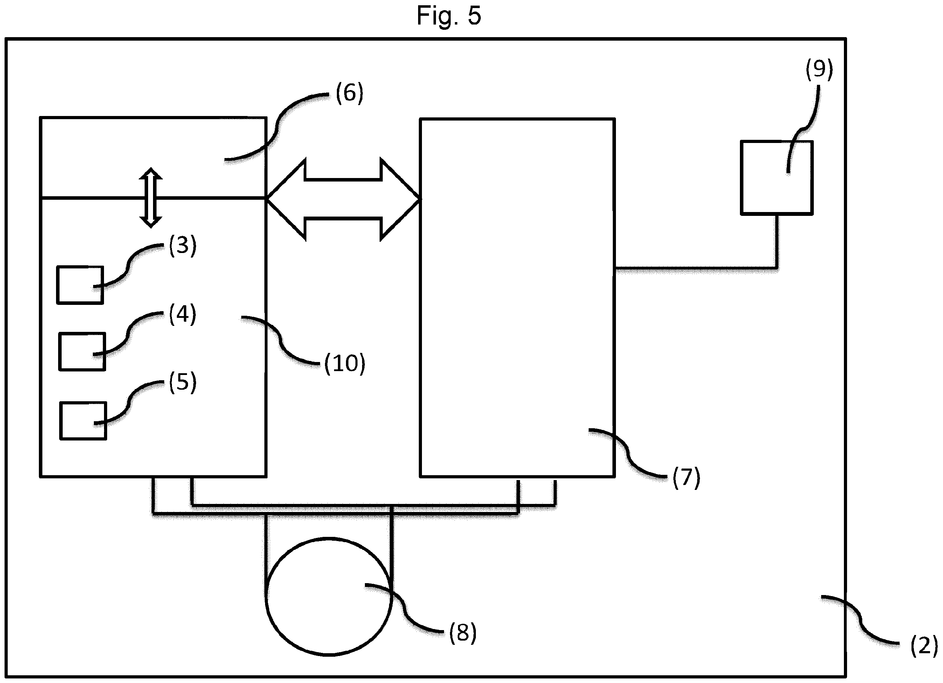

With reference to fig.5, the monitoring unit (2) comprises a sensing section (10), a battery (8), a processing unit (or CPU) (6) associated with a memory, a transceiver (7), an antenna (9).

The monitoring unit (2) can be a relatively cheap ("tire-rotation triggered monitoring unit" as defined in the foregoing), currently available on the market generally comprising temperature and/or pressure sensors and an accelerometer or other inertial sensor, whose output signal is only used for "waking up" the tire temperature and/or tire pressure measurements (where "waking up" also includes making the tire temperature and/or tire pressure measurements relatively more frequent than a basic, stand-by measurement rate), that is, an accelerometer which is operated at low sampling frequency in order to save power so as to save power when the vehicle is at rest (e.g. during parking).

According to an embodiment, the acceleration sensor or other inertial device available on such low frequency operated monitoring unit is used for detecting the tire deformation, i.e., the output signal of the acceleration sensor (or other inertial device) is analysed, or processed, to derive information about tire deformations.

Particularly, the sensing section (10) of the monitoring unit (2) comprises an accelerometer (3), particularly a radial accelerometer, oriented within the monitoring unit (2) so as to have an axis substantially orthogonal to the inner surface of the tire. The accelerometer (3) is configured to output an acceleration measurement descriptive of deformations in radial direction which said tire (1) undergoes during rolling. Other sensing elements adapted for measuring physical quantities descriptive of tire deformations could be used, such as tangential accelerometers, lateral accelerometers, strain gauges, etc.

The sensing section (10) of said monitoring unit (2) further comprises a pressure sensor (4) configured to output a measurement of the pressure internal to said tire (1). The sensing section (10) of the monitoring unit (2) further comprises a temperature sensor (5) configured to output a measurement of the temperature of said tire (1).

The accelerometer (3) is configured to operate at low sampling frequency and to output a trigger signal for triggering the tire pressure and temperature measurements by the pressure sensor (4) and the temperature sensor (5). According to an embodiment of the present invention, the measurement at low sampling frequency of the acceleration descriptive of deformations in radial direction which said tire (1) undergoes during rolling outputted by the accelerometer (3) is provided to the central processing unit, CPU, (6).

The central processing unit, CPU, (6) is configured, via suitable software/firmware modules, to receive, from the sensing section (10), data related to the measurements performed by the radial accelerometer (3) and the temperature and pressure sensors (4,5). The CPU (6) is also configured, via suitable software/firmware modules, to process the data received from said sensors and accelerometer (3,4,5) in order to obtain, from said data, tire related parameters (such as the length of the tire contact area with the tire rolling surface and/or the load exerted on a tire). Alternatively, the CPU (6) can be configured, via suitable software/firmware modules, to process said data up to a certain extent, i.e. to perform only part of the processing, and then to send the processing results to an external controlling unit, via the transceiver (7) and the antenna (9), to complete the processing up to obtain said tire related parameters. The CPU (6) may be also configured, via suitable software/firmware modules, to receive access and/or stopping conditions from the external controlling unit. The access conditions may be used by the CPU (6) as a trigger to command the sensing section (10) to start the measurements needed for the estimation of the tire related parameters, and/or to start the processing needed for the estimation of the tire related parameters. The stopping conditions may be used by the CPU (6) as a trigger to stop or suspend the measurements performed by the sensing section (10), and/or to stop or suspend the processing needed for the estimation of the tire related parameters.

The transceiver section (7) is configured for bidirectional communication via the RF antenna (9) with an external controlling unit specifically configured for communication with the monitoring units (2) comprised within the tires of a vehicle. Alternatively, the transceiver section (7) can directly communicate, via the RF antenna (9), with a vehicle control system, such as the vehicle board computer. In preferred embodiments, the transceiver (7) comprises a Bluetooth Low Energy (BLE) module.

The battery (8) directly or indirectly feeds electrical power to the various components of the monitoring unit (2). In preferred embodiments, it can be a battery rechargeable with power scavenged from mechanical energy caused by tire rotation.

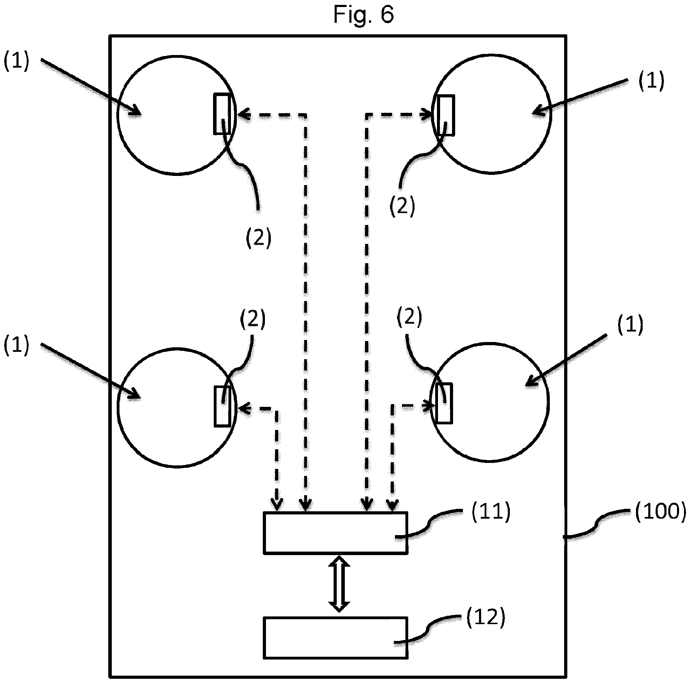

Fig.6 schematically shows an embodiment of a system for monitoring tires. The system is implemented in a vehicle (100) fitted with four tires (1), each of which comprising a respective monitoring unit (2). The vehicle (100) may be for example a car. However, the present invention also applies to other kinds of vehicles, such as two or three wheeler scoters, motorbikes, tractors, buses, trucks or light trucks, i.e. to vehicles with two, three, four, six or more wheels distributed on two or more axles. The vehicle (100) can be driven by electrical power, or relying on thermal propulsion or it can be a hybrid vehicle.

The monitoring units (2) are in communication with a controlling unit (11). The controlling unit (11) is in communication with a vehicle control system (12) configured for adjusting vehicle control parameters based on tire related parameters estimated by the monitoring units (2) and/or by the controlling unit (11). The vehicle control system (12) can be the control board computer of the vehicle (100), and/or a subsystem configured for adjusting at least one of said vehicle control parameters (e.g. a suspension control subsystem, a brake control subsystem, a steering control subsystem, a module configured for estimating a residual mileage of the vehicle).

Typically, the communication between the monitoring units (2) and the controlling unit (11) is a wireless communication (e.g. Bluetooth communication). The communication between the controlling unit (11) and the vehicle control system (12) can be wireless and/or wired (e.g. on a CAN BUS). In other preferred embodiments, the controlling unit (11) can be a hardware of software module implemented in the vehicle control system (12).

The controlling unit (11) is external with respect to the tires (1) wherein the monitoring (2) unit are secured. Said controlling unit (11) can be placed anywhere in the vehicle which can be reached by the wireless (e.g. Bluetooth) signal transmitted by the monitoring units (2).

For example, the external controlling unit (11) can be a box attached to the vehicle windshield. In another embodiment, the external controlling unit (11) can be a mobile personal device of the vehicle driver (e.g. a smartphone or a tablet), provided with suitable software applications/modules configured at least for communication with the monitoring units (2), as well as for processing data received from the monitoring units (2).

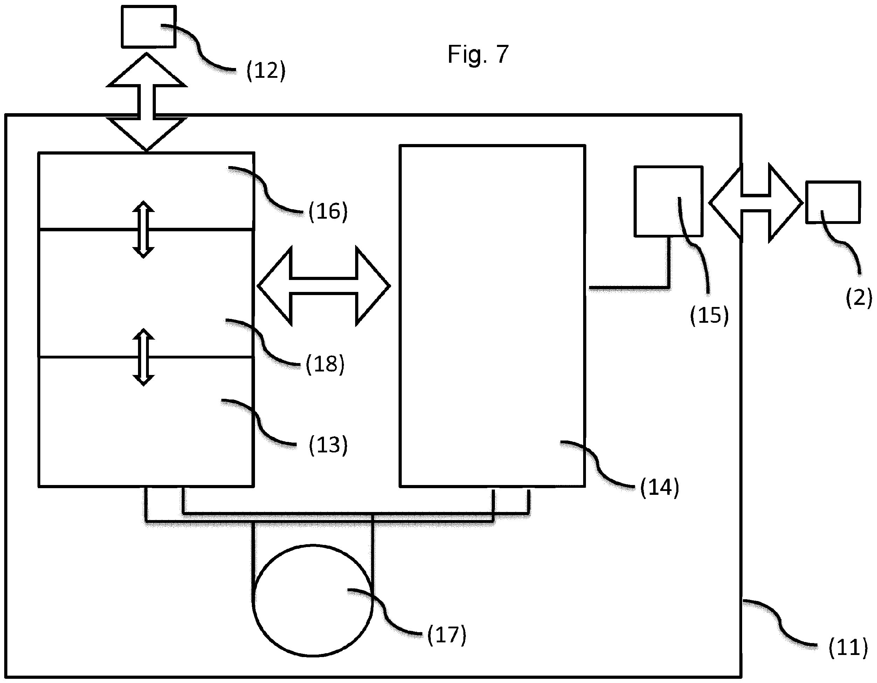

Fig.7 schematically shows an embodiment of a controlling unit (11) suitable for the system for monitoring tires of Fig.6. The controlling unit (11) comprises a GPS unit (13), a transceiver section (14), a RF antenna (15), an interface (16) to the vehicle control system (12), a battery (17), a processing unit (18) associating with a memory.

In the preferred embodiment shown in fig.7, the controlling unit (11) comprises a GPS unit (13). Alternatively, the controlling unit (11) may use data provided by an external GPS unit, for example a GPS unit on the vehicle or on a mobile personal device of the vehicle driver, such as a smartphone or a tablet.

The transceiver section (14) of the controlling unit (11) is configured for bidirectional communication via a RF antenna (15) with the monitoring units (2). In preferred embodiments, the transceiver section (14) comprises a Bluetooth Low Energy (BLE) module.

The interface (16) can be a CAN BUS interface adapted for bidirectional communication with the vehicle control system (12).

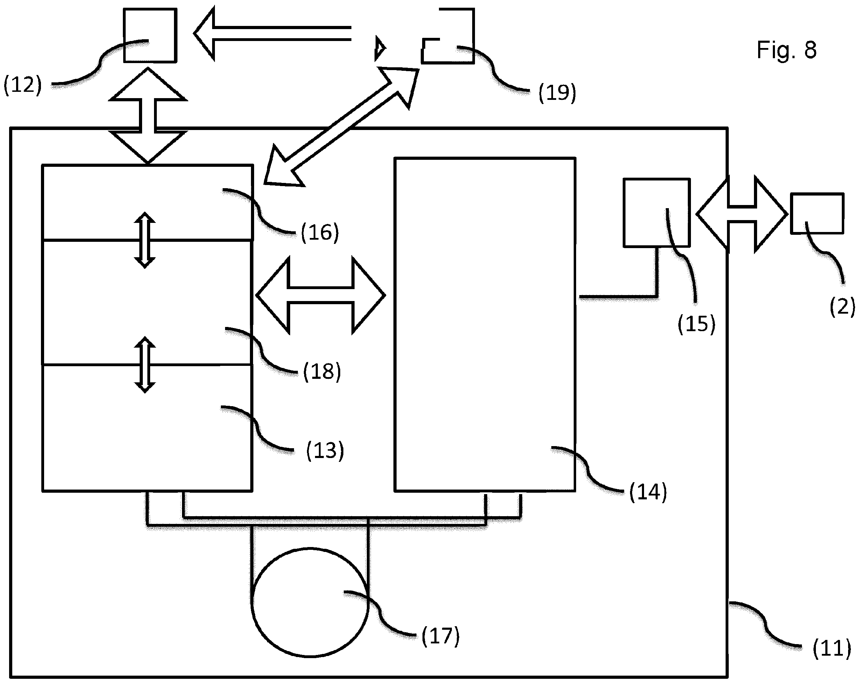

In one embodiment, schematically shown in fig. 8, said CAN BUS (16) can be interrogated by the controlling unit (11) to read and store in a memory section data provided by the ABS (19) about the rotation frequency $\omega_R$ of the tires, as well as about possible variations of the tire rotation frequency $\omega_R$ during the amount of time along with the low frequency sampling is carried out by the monitoring unit (2).

In another embodiment, said ABS data about the rotation frequency $\omega_R$ of the tires, as well as about possible variations of the tire rotation frequency $\omega_R$ during said amount of time, are communicated to the monitoring unit (2).

The battery (17) directly or indirectly feeds electrical power to the various components of the controlling unit (11). In other embodiments, the controlling unit (11) can be powered by the vehicle battery, via the interface (16).

The processing unit, CPU, (18) of the controlling unit (11) is configured, via suitable software/firmware modules, to receive data from the monitoring units (2) comprised within the tires. Such data may comprise tire parameters estimated by the monitoring units (2), or measurements performed by the monitoring units (2), or results of partial processing performed on said measurements by the monitoring units (2).

For example the monitoring unit (2) can transmit to the controlling unit (11) the values of the sampling points, or the reconstructed curve, or the length of the contact area estimated from said curve or even the load acting on a tire, or another tire parameter, calculated form said reconstructed curve.

The CPU (18) is also configured, via suitable software/firmware modules, to process such data in order to estimate at least one tire related parameter or to communicate the estimated tire parameter already provided by the monitoring unit (2) to the vehicle control system (12).

The CPU (18) may be also configured, via suitable software/firmware modules to monitor access and/or stopping conditions to be applied for triggering starting and/or stopping/suspending the estimation of the tire related parameter(s), and/or possibly discarding those measurements performed during acquisitions occurred within time intervals in which those access conditions were not met.

Ultimately the choice of whether distributing the processing between the monitoring units (2) and the external controlling unit (11) for the tire related parameter estimation is a tradeoff between several constraints to be balanced, such as: hardware complexity, battery consumption, cost, processing power available to the CPU of the monitoring units, etc.

In the preferred embodiment shown in fig.7 and/or fig. 8, the tire related parameter or parameters estimated by the CPU of the monitoring units (2) and/or by the CPU of the controlling unit (11) is/are eventually made available to the vehicle control system (12) via the interface (16).

In an exemplary operation mode, each tire (1) fitted to a wheel of the vehicle (100) is caused to rotate on a rolling surface. As a consequence of the fitting, the tire is deformed so as to form a contact area between the tire (1) and the rolling surface. Each monitoring unit (2) comprised within a tire (1) is preferably paired with said tire, e.g. by storing identifying information of the tire (e.g. tire identifier, tire size, tire model, tire radius etc.) within the memory associated with the CPU (6) of the respective monitoring unit (2).

Pressure and temperature measurements can be performed by the monitoring unit (2) comprised within the tire (1) at discrete time intervals, for example every 30 seconds or upon request of said controlling unit (11) at any time during tire rolling. The start of pressure and temperature measurement can be triggered based on a signal sent by the accelerometer (3) when the tire starts to rotate, or upon request from the external controlling unit (11) or the vehicle control system (12).

The controlling unit (11) monitors the vehicle status based on GPS data and/or based on data read from the CAN BUS.

In one preferred embodiment when the speed of the vehicle (100) is between 40 km/h and 100 km/h (or more preferably within 60 km/h and 80 km/h) and/or when the absolute value of the longitudinal acceleration is lower than 1 $m/s^2$, the controlling unit (11) determines that the access conditions are met and communicates to each of the monitoring units (2) to start the measurement of the selected physical quantity representative of the tire deformation, e.g. the radial acceleration, in order to start the estimation of at least one tire related parameter. A further access condition may be based on the check that the absolute value lateral acceleration of the vehicle is lower than 0.3 $m/s^2$.

The controlling unit (11) further communicates to each of the monitoring units (2) the speed V of the vehicle so that said monitoring units (2) can, (also independently one form the others) set an initial absolute threshold value for the acceleration, (e.g. as $V^2/(2R)$, wherein R is a tire radius), and furthermore the monitoring units (2) can set an initial tire rotation frequency $\omega_R$ (based on an estimation of the tire radius) and consequently an initial tire rotation period $T_R$. Moreover, the monitoring units (2) set the sampling frequency $\omega_S$ (or at least its initial value) based on said initial tire rotation frequency $\omega_R$ so that a predetermined frequency difference $\Delta\omega$ (whose value can be stored in software/firmware modules of each monitoring unit (2)) is established between said sampling frequency $\omega_S$ and said tire rotation frequency $\omega_R$ (or said initial tire rotation frequency $\omega_R$), or an integer multiple $N\omega_R$ thereof. Alternatively the controlling unit (11) can communicate to said monitoring units (2) the initial value of said acceleration threshold and/or said initial tire rotation frequency $\omega_R$ and said initial tire rotation period $T_R$.

Furthermore the controlling unit (11) can communicate to each of the monitoring units (2) at least an initial value of the frequency difference $\Delta\omega$ between said sampling frequency $\omega_S$ and said tire rotation frequency $\omega_R$ (or said initial tire rotation frequency $\omega_R$), or an integer multiple $N\omega_R$ thereof.

The controlling unit (11) may also communicate the amount of time to be allocated for the measurements, or, equivalently, the overall number of measurements to be performed. The amount of time or the overall number of measurements can also be directly stored in the software/firmware of each monitoring unit (2). In particular, the amount of time should be long enough to encompass several complete tire rotations at the vehicle speeds of interest. For example, the amount of time can be of several seconds (e.g. 1-10 seconds).

When the measurement is started, the radial acceleration is measured at a low sampling frequency.

For example the radial acceleration is measured at a sampling frequency close to 250 Hz, which, as previously discussed, allows reaching a trade off between short measurement duration (shorter than 10 seconds) and high degree of accuracy in the curve reconstruction.

In another embodiment, the sampling frequency $\omega_s$ can be changed in response to variation of the rotation frequency of said tire (1), so as to maintain a proper frequency difference $\Delta\omega$ with the tire rotation frequency $\omega_R$ (or said initial tire rotation frequency $\omega_R$), or an integer multiple $N\omega_R$ thereof. The updated sampling frequency value can be communicated by said external controlling unit (11) to each of said monitoring units (2) or can be calculated by each monitoring unit (2) itself.

Preferably, an overall number of at least one hundred of measurements is performed within the allocated amount of time.

For example, a monitoring unit working at a frequency close to 250 Hz will perform an overall number of about 500 measurements in 2 seconds thus collecting a plurality of about 500 sampling points comprising contact area points to be assembled in a reconstructed curve.

At a typical vehicle speed of about 70 km/h, corresponding to a tire rotation frequency $\omega_R$ of about 8.72 Hz, about 19 tire rotations will be sampled during said 2 seconds sampling time.

During the radial acceleration measurements, the value of each measurement can be compared with said threshold value in order to determine whether each sample value can be considered as representative of a passage of the monitoring unit in correspondence of the contact area between the tire and the rolling surface, e.g. to determine whether a sampling point can be considered as contact area point.

In this particular case, having set the initial threshold value as $0.5 * V^2/R$, radial acceleration sampling points whose absolute value is lower than said threshold will be considered as representative of passages of said monitoring unit in correspondence of the contact area, i.e will considered as contact area points.

The threshold value, initially set as $V^2/(2R)$, can be changed in response to variation of the rotation speed of said tire (1). The updated threshold value can be communicated by said external controlling unit (9) to each of said monitoring units (2) or can be calculated by each monitoring unit (2) itself.

The determination of whether a sampling point can be considered as representative of a passage of the monitoring unit (2) in correspondence of the contact area can be carried out point by point. Alternatively, a sequence of measurements can be obtained, followed by an extraction from said sequence of a set of measurements having values representative of passages of said monitoring unit (2) in correspondence of said contact area, i.e. an extraction of the contact area points.

In one preferred embodiment, the variation of a tire rotation frequency $\omega_R$ during said amount of time is obtained from said plurality of sampling points according to the following:

1) Within said plurality of sampling points, identifying and then extracting the *contact area points* and their respective sampling time.

2) Calculating the tire rotation frequency $\omega_R$ based on the time difference between the sampling times of *contact area points* of consecutive turns, thus obtaining a first plurality of time difference values from which a variation of a tire rotation frequency $\omega_R$ along said amount of time can be tracked and/or identified.

3) Preferably calculating a refined second plurality of values representing the variation of a tire rotation frequency $\omega_R$ along said amount of time, using an interpolation method applied to said first plurality of time difference values.

The aforementioned method to obtain the variation of a tire rotation frequency $\omega_R$ during said amount of time from said plurality of sampling points, will be hereinafter defined as *"Auto*-speed" and as such will be addressed in the following.

In order to use the *Auto-speed* method, the sampling frequency $\omega_S$ is preferably selected so as to obtain that at least an average of 0.5 contact area points are present per tire rotation in the acceleration measurement during said amount of time, for a vehicle speed up to 100 km/h.

Generally a sampling frequency greater than 150 Hz, preferably greater than 200 Hz, will allow to meet the aforementioned constraint for a vehicle speed up to 100 km/h.

As already underlined, the embodiments exploiting *Auto-speed,* are particularly preferred since the reconstruction of the curve with the obtained sampling points can be carried out by said monitoring unit (2) and then further transmitted to said controlling unit (11), thus reducing the amount of data to be transmitted and consequently saving power during data transmission.

Alternatively if the sampling frequency is too low to obtain the variation of a tire rotation $\omega_R$ frequency from said plurality of sampling points (e.g. for the use of the *Auto-speed* method), or if an extremely low complexity monitoring unit (2) has to be used, in another embodiment, the estimation of the variation of each tire rotation frequency $\omega_R$ during said amount of time can be obtained by the controlling unit (11) by reading data from the ABS which are generally available over the CAN bus.

This embodiment is particularly advantageous since the ABS is generally set to measure with very high precision the tire rotation frequency $\omega_R$, so that when said ABS data are used in the reconstruction of the curve, the precision of the tire parameter(s) estimation can be further increased.

Said ABS data (for each tire/wheel) are stored in the software/firmware module of said controlling unit (11) and/or transmitted to the each monitoring unit (2), depending on where the reconstruction of the curve is carried out.

As previously discussed, in some embodiments it is not really necessary to actually carry out the radial acceleration measurements at each sampling period. Measurements within tire rotations to be performed when the monitoring unit (2) is certainly not in correspondence of the contact area can be skipped and substituted by "virtual measurements" (or "virtual samples") which are not actually carried out.

In such case at each sampling time corresponding to a virtual sample can be assigned an accelerometric value which takes into account the monitoring unit (2) is certainly not in correspondence of the contact area, for example a value corresponding to $V^2/(R)$ using the speed values V previously communicated to the monitoring unit (2).

In the embodiments wherein virtual samples are obtained, said plurality of sampling points will comprise both real and virtual samples to be assembled in a reconstructed curve. Advantageously, this can result in a significant saving of the energy used by the battery (8) of the monitoring unit (2) during both sampling and transmission, ultimately increasing the lifespan of its battery (8).

To activate the "virtual sampling", the CPU (6) of the monitoring unit (2) can be configured, via suitable software/firmware modules, to switch off the measurement of the radial acceleration value during a switch off time expected after a contact area point and before the contact area point(s) of the consecutive tire rotation. The switch off time can be set based on the time rotation period estimated, e.g. based on the *Auto-speed* tracking and/or based on ABS data received from the controlling unit (11)

Such software/firmware modules are also configured for determining the number of virtual measurements (i.e. the number of measurement not actually carried out) based on the sampling frequency and said switch off time.

This is particularly convenient in the embodiment wherein the monitoring unit (2) calculates the time occurring between two consecutive tire rotations. In this case, said switch off time can be preferably set in the range between one third and three quarters of the tire rotation period.

At the expiring of a maximum amount time allocated for the radial acceleration measurement, the external controlling unit (11) communicates each monitoring unit (2) to stop the acceleration measurements and to communicate their outcome, for example said plurality of sampling points, or said curve, or said tire related parameter.

Alternatively said external controlling unit (9) can communicate each monitoring unit (2) to stop the measurements when some stopping conditions are met, for example if the vehicle speed is outside a predetermined speed range or if an absolute value of the longitudinal acceleration exceeds a predetermined acceleration threshold.

Alternatively the monitoring unit (2) itself can stop the acceleration measurement at the expiring of the maximum amount of time, or, in the embodiment previously described wherein said monitoring unit (2) can estimate the vehicle speed, when at least one of the rotation/vehicle speed or the longitudinal acceleration is outside a predetermined range.

Once the acceleration measurement is over, the following data are available to the tire monitoring system:

- A plurality of sampling points comprising both real and/or virtual samples obtained over many tire rotations to be assembled in a reconstructed curve, namely: the measured acceleration value of each sampling point and, optionally, the relative acquisition time.

- The initial value at the beginning of said amount of time of the tire rotation frequency $\omega_R$ and its subsequent (possible) variation along said amount of time, either obtained from using *Auto-speed* (during the sampling or as a post processing operation after the expiring of said amount of time) and/or obtained from the ABS data for each tire.

Based on the said aforementioned data available to the tire monitoring system, the assembling of all, or some, of the available sampling points to obtain a reconstructed curve is carried out.

In one embodiment, said curve can be reconstructed by assembling in a predetermined time slot (for example the tire rotation period, preferably of the first tire rotation) the plurality of sampling points. In particular, a respective position within the time slot is assigned to each sampling point.

For example, the following formula could be used to assign a position in the predetermined time slot to each sampling point:

$$t_{RESCALED}(n) = t_{MEASURED}(n) - (n-1)\,T_R - T_0 = (n-1)\Delta T - T_0 \qquad n = 1,2,3....$$

Wherein $T_{MEASURED}(n)$ is the actual time in which the $n^{th}$ sampling point has been measured (or "virtually measured"), $t_{RESCALED}(n)$ is the temporal position assigned to the $n^{th}$ sampling point in the time slot, $\Delta T$ is the difference between the sampling time $T_S$ and the tire rotation period $T_R$ and $T_0$ is a curve shifting constant (preferably $T_0 = 0$).

The above formula applies in the assumption of an almost constant tire angular speed.

In embodiments in which the vehicle and/or tire speed is not constant and can vary along the amount of time during which said plurality of sampling points is obtained, the assignment of a respective time position within the time slot to each sampling point is carried out based on the sampling frequency $\omega_S$, an initial value of the tire rotation frequency $\omega_R$ (preferably at the starting of said amount of time) and the time variation along the amount of time of the tire rotation frequency $\omega_R$.

For example, the following formula could be used to assign a respective position to each sampling point, in a predetermined time slot whose duration in this case has been set as the initial tire rotation period: $T_R(0)$, e.g. the tire rotation period at the beginning of said amount of time:

$$t_{RESCALED}(n) - t_{MEASURED}(n) - (n-1)T_R(0) + \frac{T_R(0)}{2\pi}\,\Delta\varphi(n) - T_0 \;,\, n = 1,2,3....$$

wherein $t_{MEASURED}(n)$ is the actual time in which the $n^{th}$ sampling point has been measured and $t_{RESCALED}(n)$ is the temporal position assigned to the $n^{th}$ sampling point of said plurality of sampling points in the time slot, and $\Delta T$ is the difference between the sampling time $T_S$ and the initial tire rotation period $T_R(0)$ and $T_0$ is a curve shifting constant (preferably $T_0 = 0$).

In the above formula, the variation of the vehicle speed (and consequently of a tire rotation frequency $\omega_R$) is

taken into account by the corrective factor $\frac{T_R(0)}{2\pi}\Delta\varphi(n)$ which is the accumulated phase difference from the start of said amount of time and the actual time, $t_{MEASURED}(n)$, in which the $n^{th}$ sampling point has been measured wherein $t_{MEASURED}(n = 1) = 0$. $\Delta\varphi(n)$ can be calculated by the following formula:

$$\Delta\varphi(n) = \int_0^{t_{MEASURED}(n)} \Delta\omega(t)\, dt$$

wherein $\Delta\omega(t)$ represents the tire rotation frequency variation along said amount of time, e.g. the difference between the initial tire rotation frequency $\omega_R(0)$ and the tire rotation frequency $\omega_R$ along the amount of time during which the sampling is carried out. Exemplarily $|\Delta\omega(t)|$ can be lower, or much lower, than $\omega_R(0)$ and/or $\omega_R$.

In other words, in order to give the skilled man an intuitive picture, the time corrective factor in formula: $\frac{T_R(0)}{2\pi}\Delta\varphi(n)$ takes into account the whole tire rotation frequency variations (i.e. it takes into account all the vehicle accelerations or decelerations) from the beginning of said amount of time until the actual time, $t_{MEASURED}(n)$, when the $n^{th}$ sample has been measured.

As already discussed $\Delta\omega(t)$ can be either obtained based on the *Auto-speed* method, or alternatively, based on the ABS data accessible via the CAN BUS.

As previously underlined, said plurality of sampling points could also be assembled, in all or in part, in a predetermined angular slot.

Once the reconstructed accelerometric signal has been obtained, any of the methods already known in prior art to derive the length of the contact area and, consequently, the load acting on a tire could be applied to said reconstructed signal.

For example the patch length can be estimated from said reconstructed curve by estimating the (time or angular) width of the peak or peaks corresponding to the passage in the contact area.

For example, once a peak width $t_{PL}$ is obtained from the reconstructed accelerometric signal the following formula can be used, based on the estimated tire radius R and the duration of a tire rotation $T_R$, both available to the controlling (11) or monitoring (2) units as previously discussed:

$$PL = t_{PL}\frac{2\pi R}{TR}$$

In preferred embodiments, the length of the contact area and/or the load exerted on the tire (1) can be estimated.

As previously discussed, the tire related parameter can be estimated by said monitoring units (2), and/or by the external controlling unit (11), and/or by the vehicle control system (12).

For example, the CPU (6) of the monitoring units (2) can communicate to the controlling unit (11), the values of said plurality of sampling points and, optionally, the related sampling times, the tire rotation frequency variation $\Delta\omega(t)$ along said amount of time, the tire pressure and temperature values.

The CPU (18) of the controlling unit (11) can then estimate the length of the contact area PL based on such data and the reconstructed acceleration curve.

The tire pressure and the length of the contact area PL can be then used to estimate the load exerted on the tire.

For example, the load Fz exerted by the vehicle on the tire can be calculated from the estimated length of the contact area PL based on a polynomial fitting function of the contact area length, e.g. by using the above mentioned formulas:

$$Fz = A(P) + B(P) * PL$$

$$Fz = A(P) + B(P) * PL + C(P) * PL^2$$

wherein P is the tire pressure, PL is the length of the contact area and A, B, C are calibration parameters depending on the tire pressure P, whose values can be obtained by a calibration performed for the tire model to which the monitoring unit is associated. The calibration can be performed by using conventional testing machines on which a tire inflated at a controlled pressure and temperature is rotated over a conveyor belt under controlled conditions of exerted load and rotation peed. Such calibration coefficient A, B, C could be stored in the memory of the monitoring unit, the controlling unit and/or communicated to the vehicle control system.

In a more preferred embodiment, the load Fz exerted by the vehicle on the tire can be more precisely calculated from the contact area length PL based on a polynomial function of the contact length PL wherein the coefficients of said polynomial function further depend on tire pressure and rotation speed, e.g. according to above mentioned formulas:

$$Fz = A(P,\omega,T) + B(P,\omega,T) * PL$$

$$Fz = A(P,\omega,T) + B(P,\omega,T) * PL + C(P,\omega,T) * PL^2$$

wherein P is the tire pressure, PL is the estimated length of the contact area, $\omega$ is the tire rotation speed and $A(P,\omega,T)$, $B(P,\omega,T)$, $C(P,\omega,T)$ are calibration parameters depending on the tire pressure, tire rotation speed and tire temperature

Once the at least one tire related parameter has been estimated, it can be passed to the vehicle control system (12).

The vehicle control system (12) can perform the vehicle control by adjusting at least one vehicle control parameter based on an estimated tire parameter received by the external controlling unit (11) or from said monitoring units (2). For example, the vehicle control system can activate or adjust to the best alarm systems and/or vehicle dynamics control, braking, steering etc. In addition information about the vehicle status or tire related parameters (pressure, temperature, length of the contact area, load) can be communicated to the driver or can be used remotely, i.e. transmitted outside the vehicle, e.g. to one or more driver's personal devices or cloud servers.

In preferred embodiments, the vehicle control system (12) may comprise a brake controller (for example, an anti-lock brake unit), and/or a steering controller, and/or a suspension controller, and/or an engine controller, and/or a transmission controller.

For example, a vehicle brake control system may adjust the braking force on each tire according to the load on the tire.

As another example, the loads on each tire may be used to determine the vehicle stability envelope and to select the maximum variation allowed from steering commands. This information may be applicable to a steering control system (Electrically Assisted Steering Systems) to limit the yaw rate.

As another example, a vehicle suspension control system may adjust the stiffness of the suspension springs for each tire according to the load on the tire. Furthermore, a sensed unequal load distribution between left fitted tires and right fitted tires could be compensated by an Active Roll Control system, that currently use sensed lateral acceleration to increase the hydraulic pressure to move stabilizer bars, in order to remove a vehicle lean when cornering.

The conditions of the vehicle may indicate that the performance of the vehicle is reduced and that the driver should restrict his driving maneuvers. The vehicle control system itself can take action, for example in order to limit the maximum vehicle speed to maintain stability and not exceed the tire specifications, or to limit steering yaw rate in order to keep rollovers from occurring. The driver may be alerted to the current vehicle control system condition and of the actions that the vehicle control system has taken on his behalf to safe the vehicle (reducing the maximum attainable speed, steering rate, engine power), as needed on a display device. On the same display device it may also be shown whether he should take further action on his own (inflate the tires in case of excessive load not compliant with the current inflation pressure of the tires, change the distribution of mass, restrict driving maneuvers and speed). The display device may comprise a visual and/or an audible unit, for example located in the dashboard of the vehicle.

Alternatively or in combination, the vehicle control system may comprise an evaluator of a vehicle range, i.e. a residual mileage available to the vehicle (e.g. based on an available fuel and/or on an available battery power in an electrically driven vehicle), so that the vehicle control system may perform an adjustment of the residual mileage, e.g. based on the estimated load.

EXAMPLES

In a first series of tests, a flat-track equipment has been used.

A flat track equipment allows not only to precisely set the tire rotation frequency $\omega_R$ but also to control it over many tire rotations simulating the condition of a vehicle moving at almost constant speed, for example in a rectilinear path on a motorway.

It is also possible to simulate an acceleration or deceleration. Moreover the load acting on a tire can be set and controlled, as well as the deformation in the contact area and the length of the contact area itself.

In further series of tests, vehicles with sensorized tires have been driven on an actual road pavement both at constant speed and in case of vehicle undergoing accelerations and/or decelerations.

In all the following described experiments, tires manufactured and commercialized by the Applicant (Scorpion Verde All Season P245/45 R20) have been equipped with a monitoring unit, secured to the inner surface of the tread and adapted to measure the radial acceleration.

The monitoring unit could be driven up to 5 kHz, a frequency high enough to properly resolve the dynamic of the radial acceleration in a single tire rotation for a vehicle speed exceeding 100 km/h so as to generate a reference radial acceleration signal of a single tire rotation to be compared with a reconstructed radial acceleration signal obtained by the method of the present invention.

For the sake of good comparison, in all the following described experiments, a high frequency reference signal (5 kHz sampling frequency), has been acquired in the first few tire rotations; then a low frequency measurement section is carried out for an amount of time over many tire rotations to obtain a plurality of sampling points to assemble the reconstructed curve; in between the two acquisitions, the tire has been kept rolling for few seconds (2 to 10 seconds) in order to temporally separate the reference signal acquisition at 5 kHz from the following low frequency sampling.

More particularly, the low frequency section is a 5 kHz measurement suitably undersampled in order to extract the same samples that would be obtained by sampling at the desired low frequency, for example at 250 Hz.

In this way the same sensor, in the same crown portion of the tread, it is used for measuring both the reference signal and to sample the plurality of sampling points sampled at low frequency to be further assembled in a reconstructed curve.

In the first experiment a tire rotation frequency of about 8.72 Hz has been set, which corresponds to a vehicle speed of about 70 km/h.

To the extent allowed by the flat track equipment the tire rotation frequency $\omega_R$ has been kept as constant as possible, thus simulating the condition of a vehicle on a motorway rectilinear path or with the cruise control activated.

A sampling frequency of 8 Hz has been set, so that $\Delta\omega$ is about 0.72 Hz, while an effective sampling frequency of about 100 Hz is achieved.

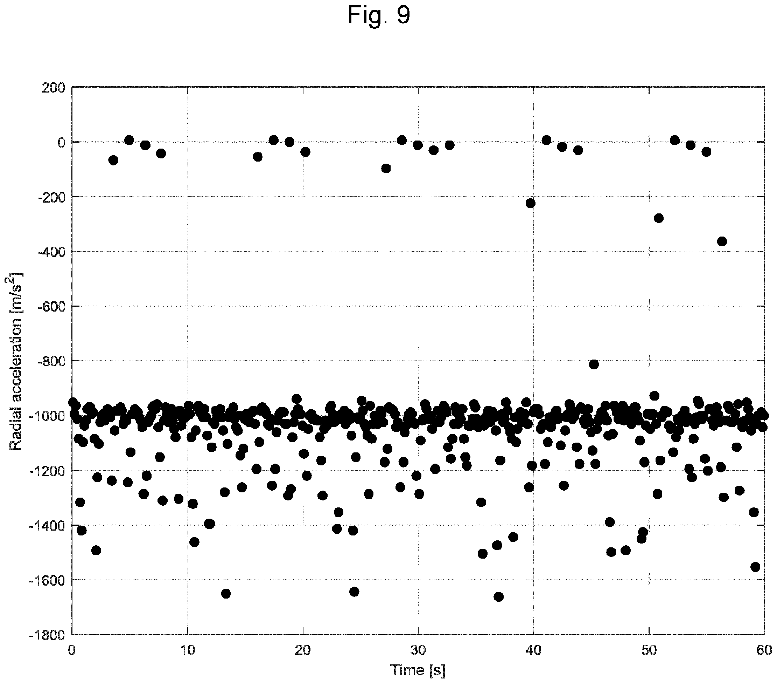

A low frequency, 8 Hz, sampling section was then carried out for an amount of time of 60 seconds, thus obtaining a plurality of sampling points comprising about 500 tire rotations, which is shown in fig. 9.

As previously discussed the plurality of about 500 sampling points of fig. 9 appears to be a representation of a strongly undersampled signal and nothing can be inferred about the signal dynamic in a single tire rotation.

At most some isolated groups of sampling points representative of the monitoring unit in correspondence of the tire contact area can be identified.

However when the sampling points are assembled in the same time slot $T_R$ having the duration of a tire rotation, about 0.12 seconds, a reconstructed curve can be obtained by assigning to each sampling point a proper time in said time slot $T_R$.

The same holds if the sampling points are assembled in the same angular slot corresponding to a round trip: (0 - 360°) or (0 - $2\pi$) when radiants are used.

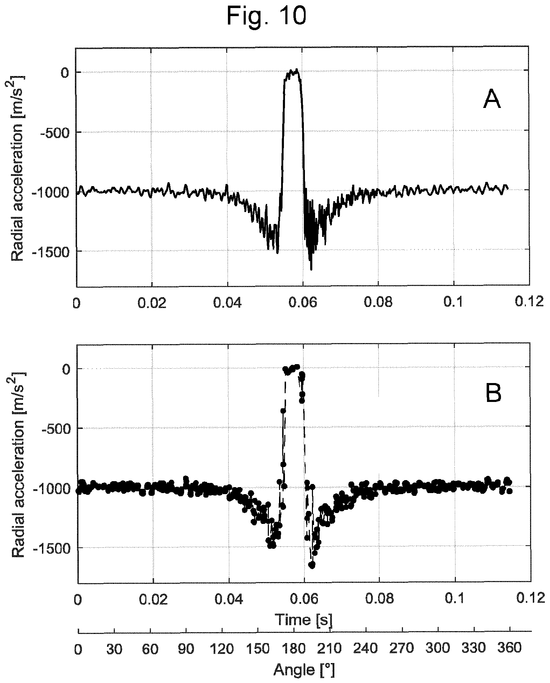

In fig. 10A and 10B the reference 5 kHz signal and the curve reconstructed by assembling the sampling points of fig.9 are separately shown, (wherein the reconstructed curve has been assembled in both time and angular slots).

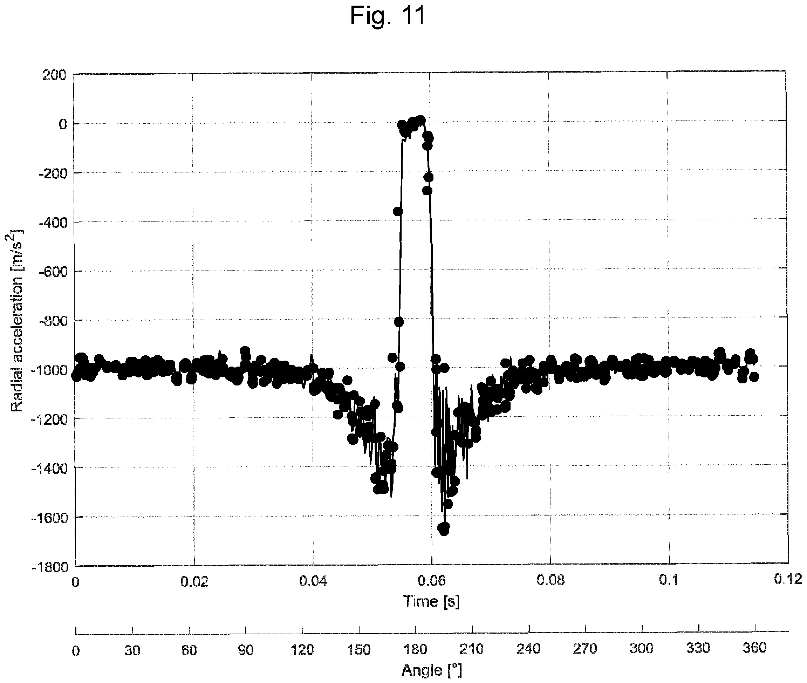

In fig. 11 the reference signal and the reconstructed curve are compared (reconstructed curve is represented by solid circled points while the reference signal by a solid line). As it is evident from the comparison of fig. 11, a very good agreement between the two is achieved, the reference signal being surprisingly almost identical to the reference one.

In a further experiment, short sampling times, as short as 2 seconds, as well as the possibility of obtaining the variation of the tire rotation frequency directly from the plurality of sampling points (e.g. to use the *Auto-speed* method) have been exploited.

As in the embodiment previously discussed a flat track has been exploited wherein a tire rotation frequency of about 8.72 Hz has been set (vehicle speed of 70 km/h). However, differently from the previous experiment, the sampling frequency has been increased up to 250 Hz, about 30 times higher than the tire rotation frequency but yet still 20 times lower than the 5 kHz necessary to get the reference signal to which the reconstructed curve is compared with.

At 250 Hz $\Delta\omega$ is about 2.88 Hz versus the 29th multiple of the rotation frequency of 8.72 Hz, while an effective sampling frequency of about 757 Hz is achieved.

The results of this further experiment are discussed with referenced to figures: 12, 13A, 13B and 14.

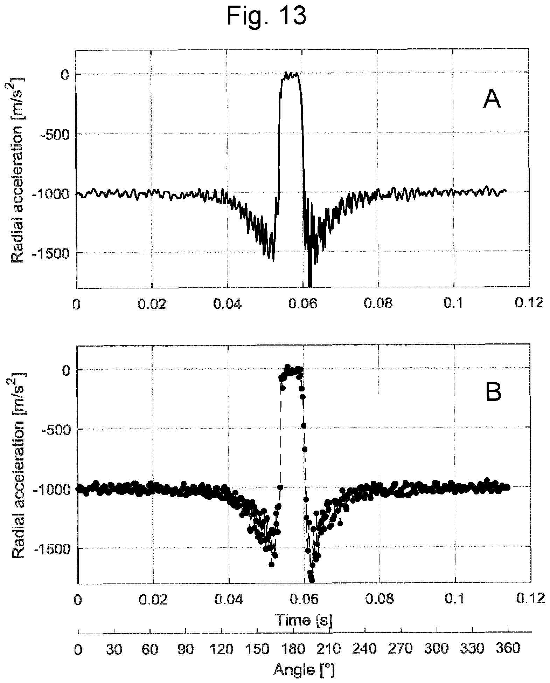

First the reference signal is acquired, then, after few seconds, a 250 Hz sampling section is carried out for 2 seconds, thus obtaining a plurality of sampling points comprising about 20 tire rotations, which is shown in fig. 13 to which reference is now made.

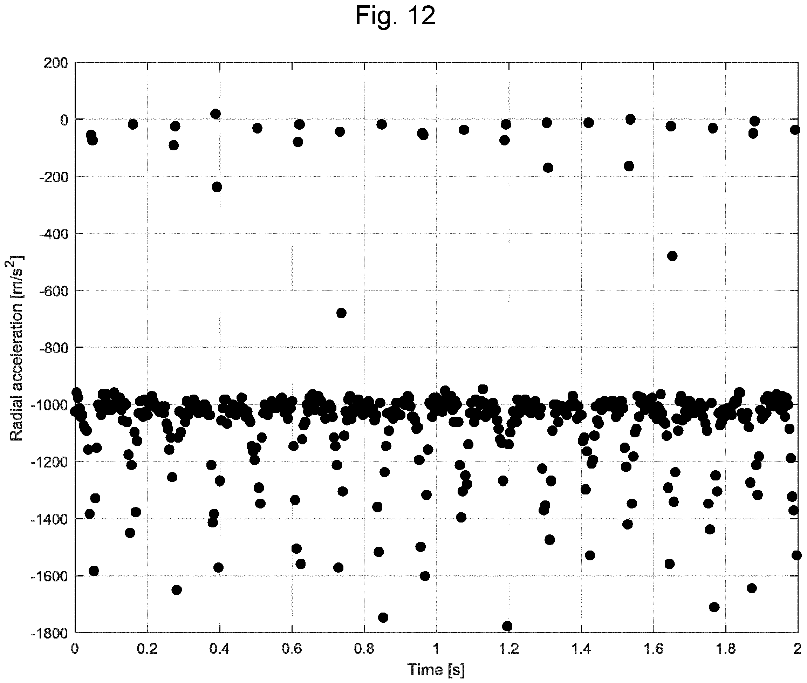

As in the previous case of 8 Hz sampling, the plurality of about 500 sampling points of fig. 12 appears to be a representation of a strongly undersampled signal and nothing can be inferred about the signal dynamic in a single tire rotation.

However, more than 20 contact area points are present, an average of about one contact area point per tire rotation.

As previously discussed, it is thus possible to estimate the tire rotation frequency variation during the amount of time of 2 seconds using the above described *Auto-speed* method in the assignment to each sampling point of a proper rescaled position in a time slot (and an angular slot) corresponding to a tire rotation.

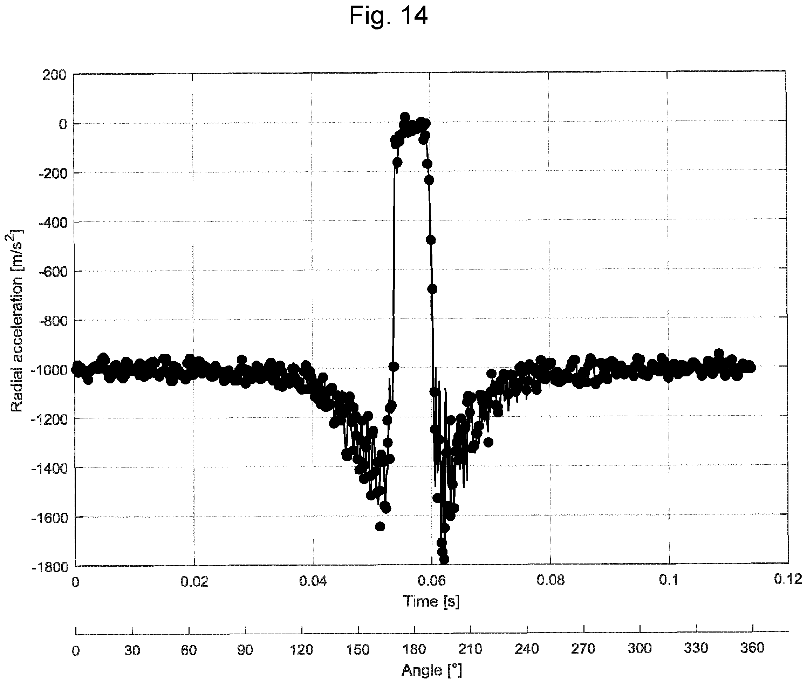

In fig. 13A and 13B the reference 5 kHz signal and the curve reconstructed by using the sampling points of fig.12 are separately shown, (wherein the reconstructed curve has been assembled in both time and angular slots). In fig. 14 the reference signal and the reconstructed curve are compared together (reconstructed curve is represented by solid circled points while the reference signal by a solid line).

As it is evident from the comparison of fig. 14, a very good agreement between the two is achieved, the reference signal being surprisingly almost identical to the reference one.

In the next experiment, again on a flat track at a tire rotation frequency of about 8.72 Hz (70 km/h), the sampling frequency has been lowered down to 170 Hz in order to test the robustness of the *Auto-speed* method.

In this case, $\Delta\omega$ is about 4.32 Hz versus the 19th multiple of the tire rotation frequency, while an effective sampling frequency of about 350 Hz is achieved.

The results of this further experiment are discussed with referenced to figures: 15, 16A, 16B and 17.

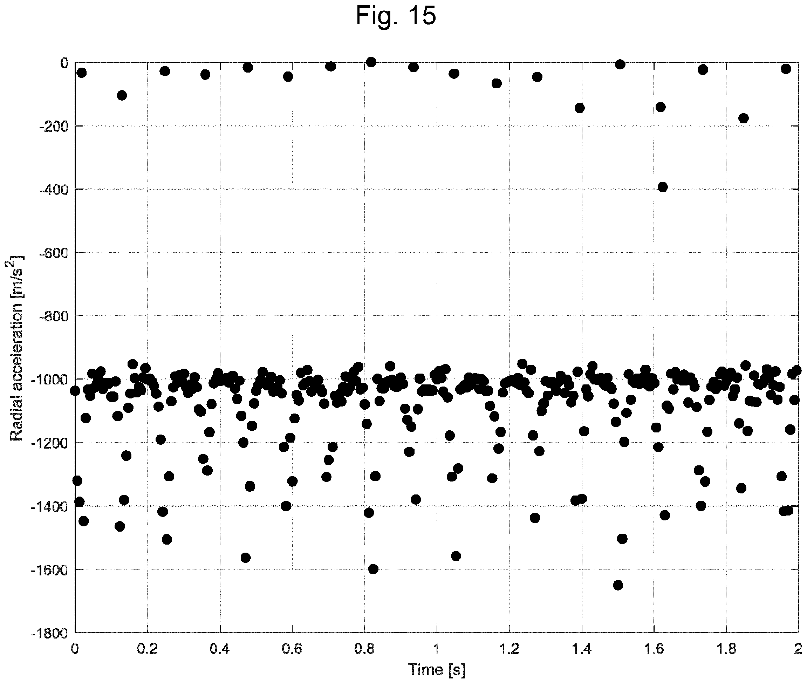

First the reference signal is acquired, then, after few seconds, a 170 Hz sampling section is carried out for 2 seconds, thus obtaining a plurality of sampling points comprising about 18 tire rotations, which is shown in fig. 15 to which reference is now made.

As in the previous cases, said plurality of 340 sampling points of fig. 15 appears to be a representation of a strongly undersampled signal and nothing can be inferred about the signal dynamic in a single roundtrip.

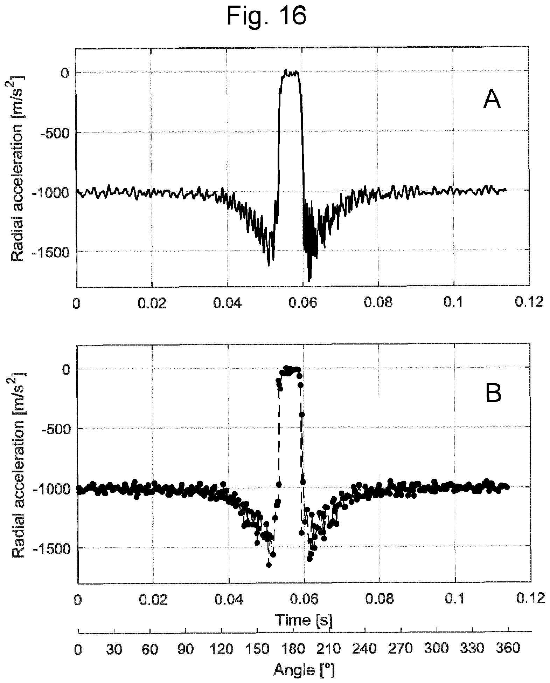

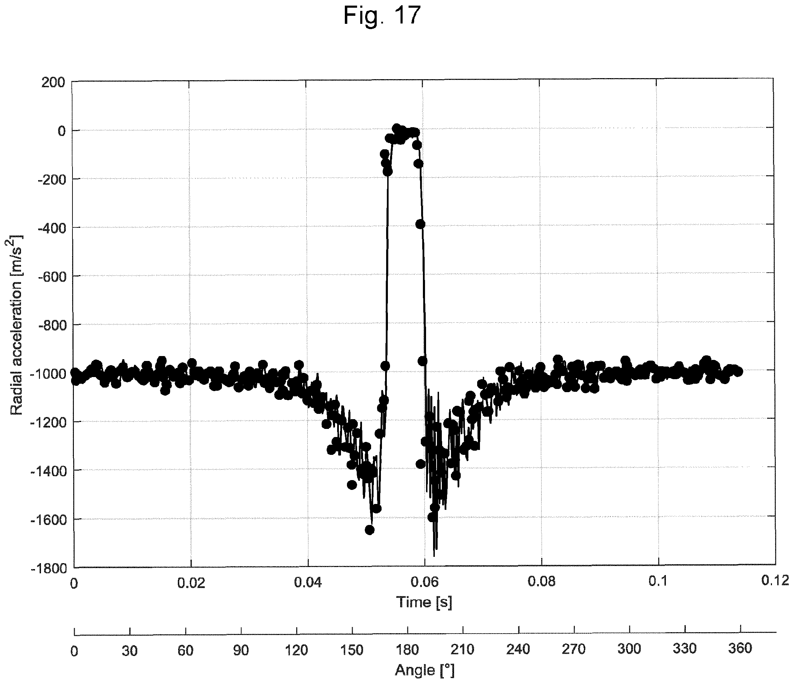

In fig. 16A and 16B the reference 5 kHz signal and the curve reconstructed from the sampling points of fig.15 are separately shown, (wherein the reconstructed curve has been assembled in both time and angular slots). In fig. 17 the reference signal and the reconstructed curve are compared together (reconstructed curve is represented by solid circled points while the reference signal by a solid line).

As it is evident from the comparison of fig. 17, a very good agreement between the two is achieved, the reference signal being surprisingly almost identical to the reference one even by using the *Auto-speed* method with a frequency as low as 170 Hz.

In a further experiment, sensorized tires have been fitted on an ALFA ROMEO 159.

The same experimental protocol adopted for the flat track experiments has been used.

In a first road experiment, the vehicle speed has been set to 40 km/h, which corresponds to a tire rotation frequency of about 5.49 Hz.

To the extent allowed by the cruise control the vehicle speed has been kept as constant as possible during the sampling time.

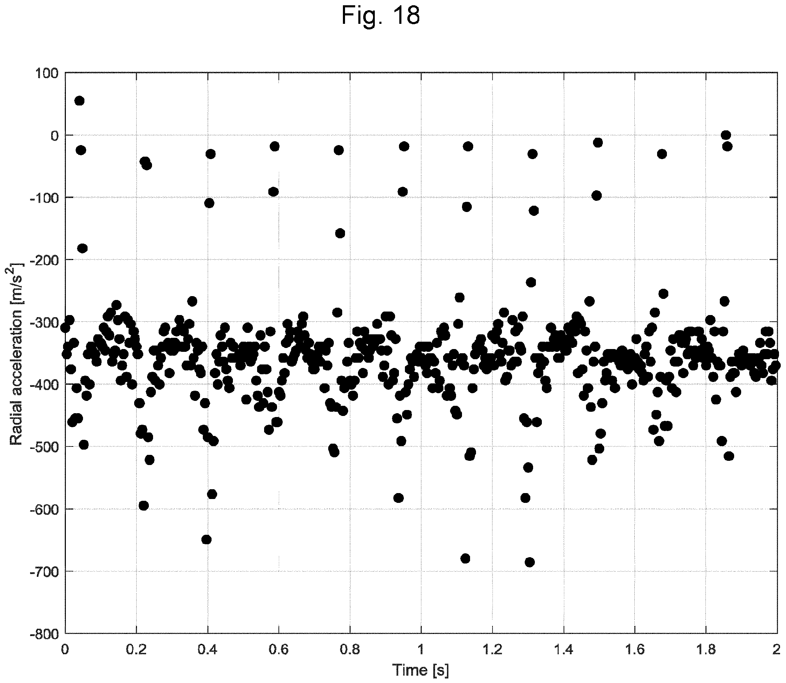

The reference signal at 5 kHz was firstly acquired, and then, after few seconds, a 250 Hz sampling section was carried out for about 2 seconds, thus obtaining a plurality of about 500 sampling points extending along about 10 tire rotations. The plurality of sampling points is shown in fig. 18.

In this case $\Delta\omega$ is about 2.54 Hz versus the 46th multiple of the tire rotation frequency, while an effective sampling frequency of about 1350 Hz is achieved.

As in the previous flat track cases, said plurality of 500 sampling points of fig. 18 appears to be a representation of a strongly undersampled signal and nothing can be inferred about the signal dynamic in a single roundtrip. The *Auto-speed* method was used to reconstruct the curve.

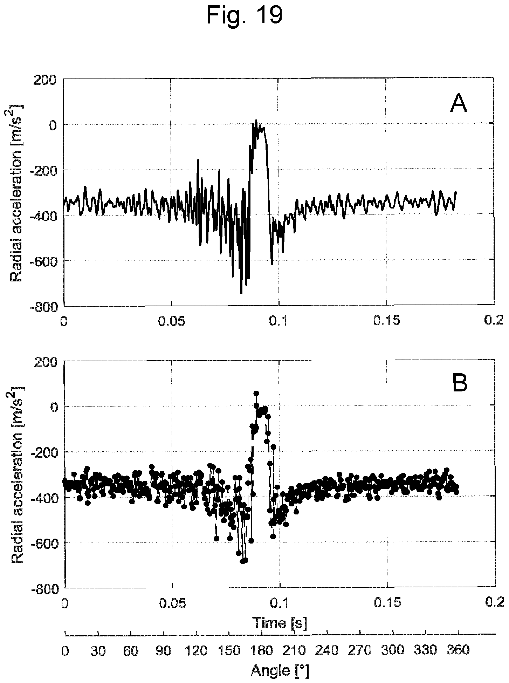

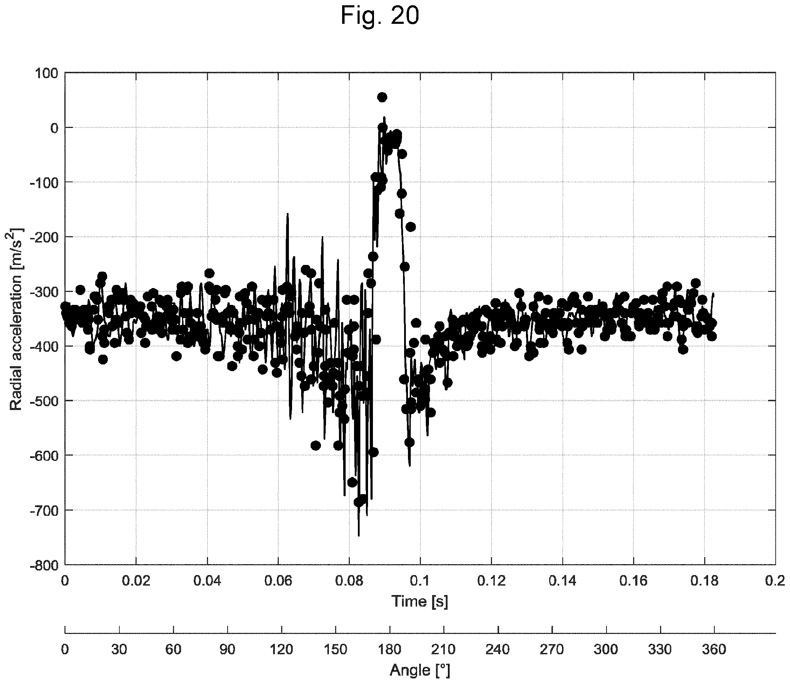

In fig. 19A and 19B the reference 5 kHz signal and the curve reconstructed with the sampling points of fig.18 are separately shown, (wherein the reconstructed curve has been assembled in both time and angular slots). In fig. 20 the reference signal and the reconstructed curve are compared together (reconstructed curve is represented by solid circled points while the reference signal by a solid line).

As in the previous flat track experiments, from the comparison of fig. 20, a very good agreement between the two is achieved, the reference signal being surprisingly almost identical to the reference one.

In further experiments, the curve reconstruction has been carried out on samples obtained with variable vehicle speed, either by acceleration and deceleration.

In all these experiments the *Auto-speed* method has been exploited, the sampling frequency has been set to 250 Hz and the sampling time to 4 seconds.

In a first case the vehicle underwent an acceleration of 0.4 m/sec$^2$ causing the vehicle speed to increase from 36 km/h at the beginning of the sampling time, up to 42 km/h at the end of the sampling time of 4 seconds.

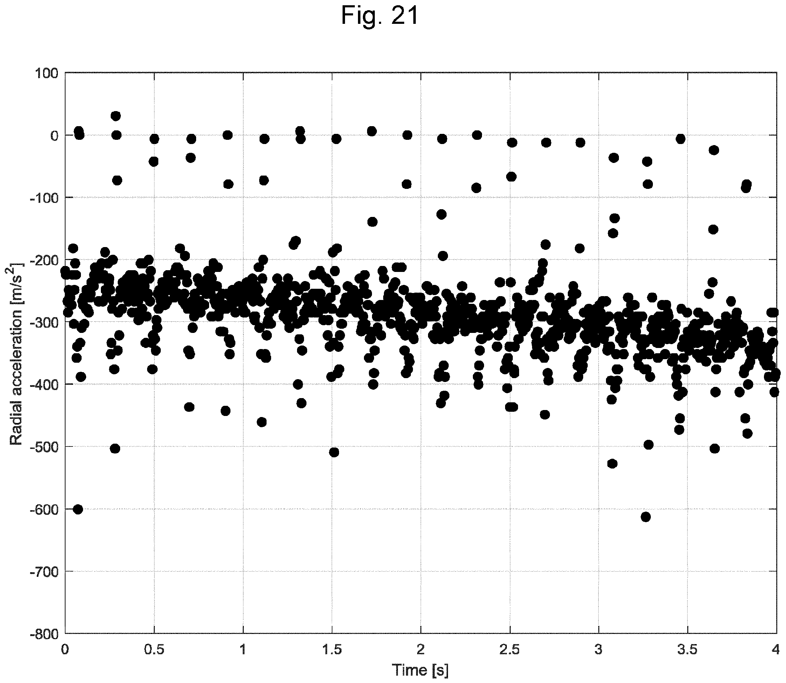

Fig.21 shows the obtained sampling points. Again, fig. 21 appears to be a representation of a strongly undersampled signal and nothing can be inferred about the signal dynamic in a single tire rotation, even if it appears quite clear that the speed is increasing.

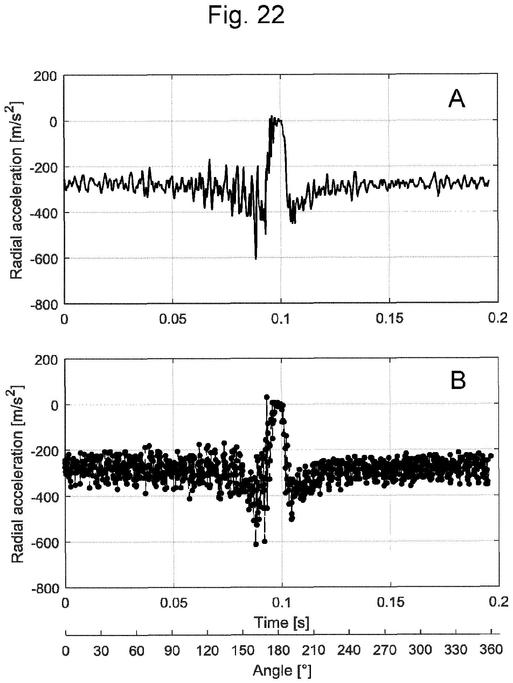

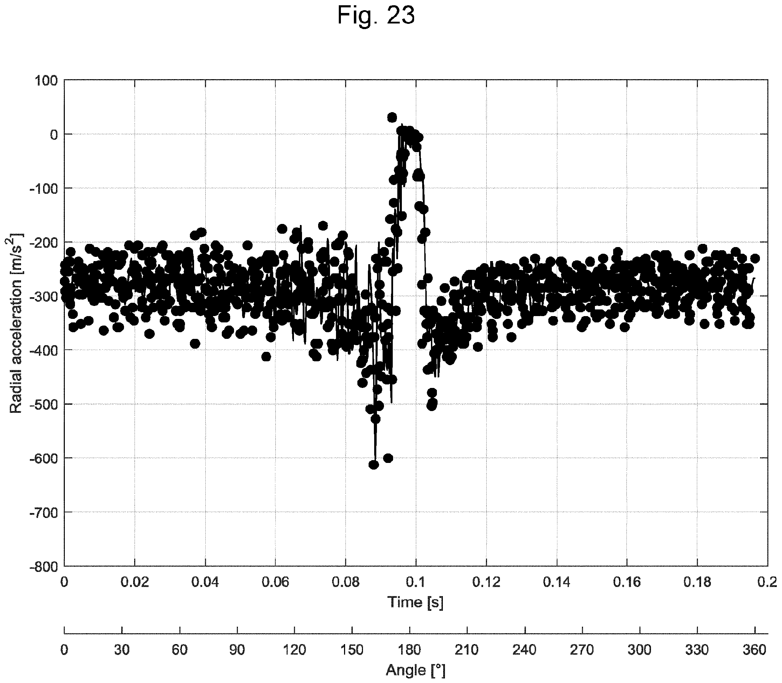

In fig. 22A and 22B the reference 5 kHz signal and the curve reconstructed by using the sampling points of fig. 21 are separately shown, (wherein the reconstructed curve has been assembled in both time and angular slots). In fig. 23 the reference signal and the reconstructed curve are compared together (reconstructed curve is represented by solid circled points while the reference signal by a solid line).

As in the previous flat track experiments, from the comparison of fig. 23, a very good agreement between the two is achieved, the reference signal being surprisingly almost identical to the reference one.

In a second case the vehicle underwent a deceleration of 0.6 m/sec$^2$ causing the vehicle speed to decrease from about 51 km/h at the beginning of the sampling time down to about 43 km/h at the end of the sampling time of 4 seconds.

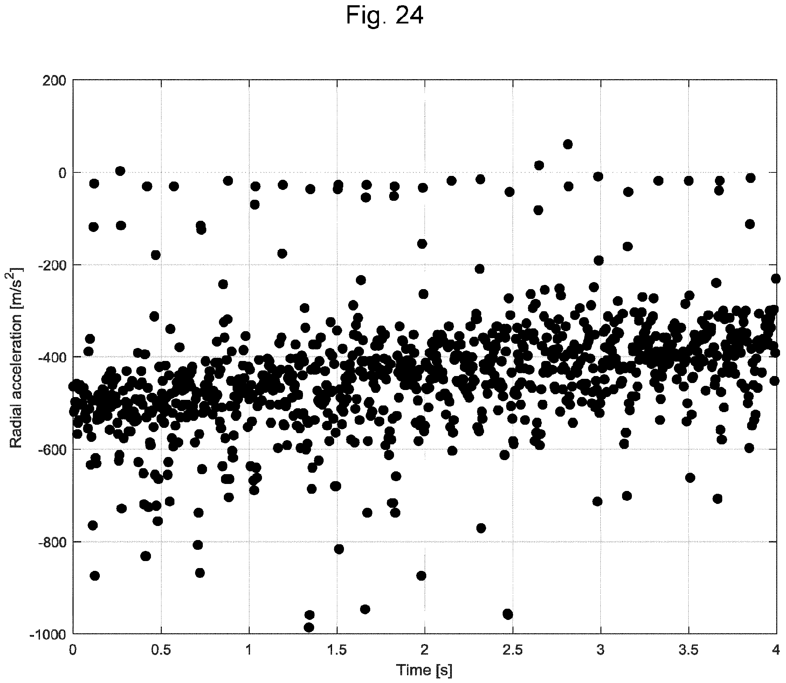

Fig.24 shows the obtained sampling points. Also in this second case the plurality of about one thousand sampling points of fig. 24 appears to be a representation of a strongly undersampled signal and nothing can be inferred about the signal dynamic in a single roundtrip, even if it appears quite clear that the speed is decreasing.

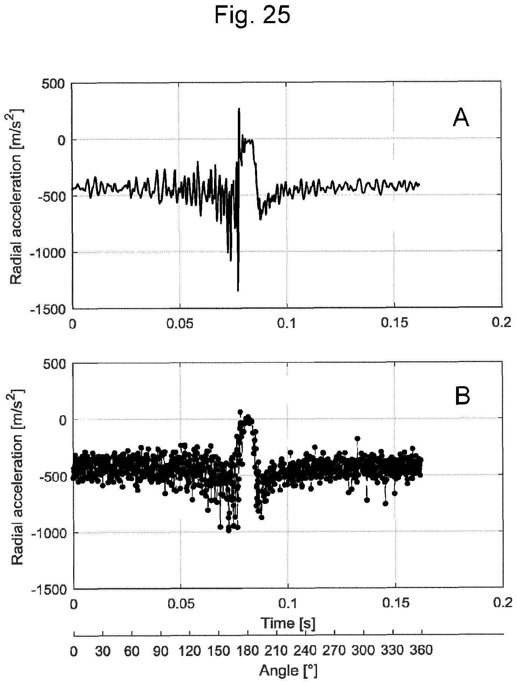

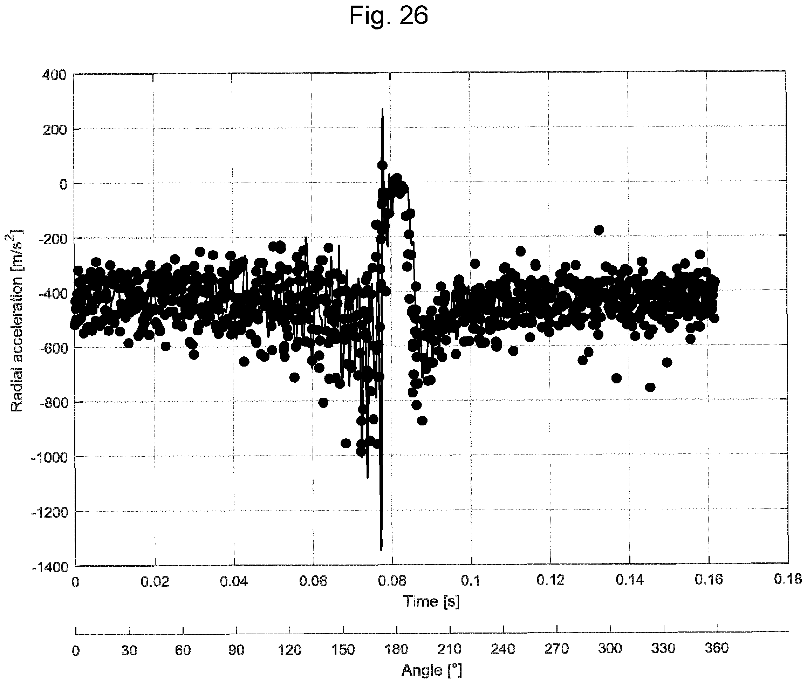

In fig. 25A and 25B the reference 5 5Hz signal and the curve reconstructed with the sampling points of fig.24 are separately shown, (wherein the reconstructed curve has been assembled in both time and angular slots). In fig. 26 the reference signal and the reconstructed curve are compared together (reconstructed curve is represented by solid circled points while the reference signal by a solid line).

From the comparison of fig. 26, a very good agreement between the two is achieved, the reference signal being surprisingly almost identical to the reference one.

In further tests performed on the flat track equipment, a tire rotation frequency of about 8.72 Hz has been set (vehicle speed of 70 km/h), four second long measurements at a sampling frequency of 250 Hz has been used to get a reconstructed acceleration curve for four different tire loads. As before a 5 kHz reference signal has been obtained for each tire load. From each one of the four reconstructed acceleration curves (obtained with the method of the present invention) and corresponding to the four different tire loads, a respective length of the contact area has been estimated ($PL_{MEAS}$).

The same method for estimating the length of the contact area, the *FFT method,* has been applied to the corresponding four 5 KHz reference signals, so as to obtain a respective precise reference length of the contact area for each tire load ($PL_{REF}$) set.

In fig. 27 it is shown a comparison for each tire load between the reference contact area lengths, ($PL_{REF}$), and contact area lengths, ($PL_{MEAS}$), calculated starting from the reconstructed acceleration curves obtained by the method of the present invention.

The values of the reference contact area lengths, $PL_{REF}$, are represented in fig. 27 by hollow circles while the values of the measured contact area lengths, $PL_{MEAS}$, are represented in fig. 27 by solid squares. The error bars of the measured contact area lengths, $PL_{MEAS}$, are also reported while the ones of the reference contact area length, $PL_{REF}$, are negligible in the fig. 27 scale.

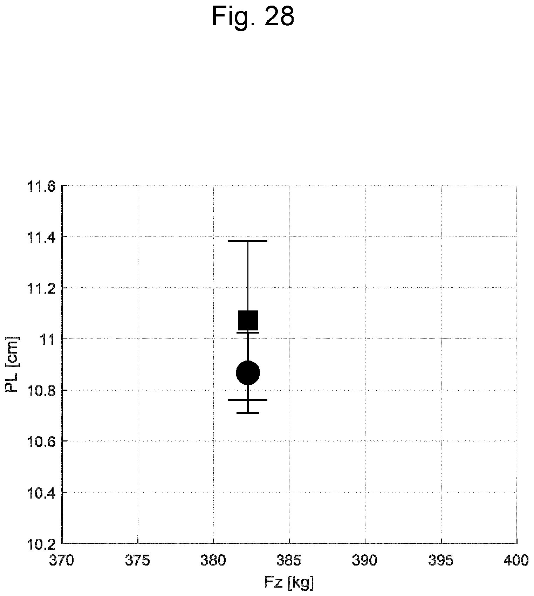

For each tire load, a very good agreement is observed in fig. 27 between the values of the measured contact area lengths, $PL_{MEAS}$, and the ones of the reference contact area length, $PL_{REF}$. They are almost identical for tire load greater than 500 kg and coincide within the error bars for a tire load lower than 400 kg, as it is shown in fig. 28 which is a magnification of fig. 27 around a tire load of 400 kg showing both the error bars of $PL_{MEAS}$ and of $PL_{REF}$ as solid lines.

In fig. 28 the value of the reference contact area lengths, $PL_{REF}$, is represented by a solid circle while the value of the measured contact area lengths, $PL_{MEAS}$, is represented by a solid square.

In fig. 22A and 22B the reference 5 kHz signal and the curve reconstructed by using the sampling points of fig. 21 are separately shown, (wherein the reconstructed curve has been assembled in both time and angular slots). In fig. 23 the reference signal and the reconstructed curve are compared together (reconstructed curve is represented by solid circled points while the reference signal by a solid line).

As in the previous flat track experiments, from the comparison of fig. 23, a very good agreement between the two is achieved, the reference signal being surprisingly almost identical to the reference one.

In a second case the vehicle underwent a deceleration of 0.6 m/sec$^2$ causing the vehicle speed to decrease from about 51 km/h at the beginning of the sampling time down to about 43 km/h at the end of the sampling time of 4 seconds.

Fig.24 shows the obtained sampling points. Also in this second case the plurality of about one thousand sampling points of fig. 24 appears to be a representation of a strongly undersampled signal and nothing can be inferred about the signal dynamic in a single roundtrip, even if it appears quite clear that the speed is decreasing.

In fig. 25A and 25B the reference 5 5Hz signal and the curve reconstructed with the sampling points of fig.24 are separately shown, (wherein the reconstructed curve has been assembled in both time and angular slots). In fig. 26 the reference signal and the reconstructed curve are compared together (reconstructed curve is represented by solid circled points while the reference signal by a solid line).

From the comparison of fig. 26, a very good agreement between the two is achieved, the reference signal being surprisingly almost identical to the reference one.

In further tests performed on the flat track equipment, a tire rotation frequency of about 8.72 Hz has been set (vehicle speed of 70 km/h), four second long measurements at a sampling frequency of 250 Hz has been used to get a reconstructed acceleration curve for four different tire loads. As before a 5 kHz reference signal has been obtained for each tire load.

From each one of the four reconstructed acceleration curves (obtained with the method of the present invention) and corresponding to the four different tire loads, a respective length of the contact area has been estimated ($PL_{MEAS}$).

The same method for estimating the length of the contact area, the *FFT method,* has been applied to the corresponding four 5 KHz reference signals, so as to obtain a respective precise reference length of the contact area for each tire load ($PL_{REF}$) set.

In fig. 27 it is shown a comparison for each tire load between the reference contact area lengths, ($PL_{REF}$), and contact area lengths, ($PL_{MEAS}$), calculated starting from the reconstructed acceleration curves obtained by the method of the present invention.

The values of the reference contact area lengths, $PL_{REF}$, are represented in fig. 27 by hollow circles while the values of the measured contact area lengths, $PL_{MEAS}$, are represented in fig. 27 by solid squares. The error bars of the measured contact area lengths, $PL_{MEAS}$, are also reported while the ones of the reference contact area length, $PL_{REF}$, are negligible in the fig. 27 scale.

For each tire load, a very good agreement is observed in fig. 27 between the values of the measured contact area lengths, $PL_{MEAS}$, and the ones of the reference contact area length, $PL_{REF}$. They are almost identical for tire load greater than 500 kg and coincide within the error bars for a tire load lower than 400 kg, as it is shown in fig. 28 which is a magnification of fig. 27 around a tire load of 400 kg showing both the error bars of $PL_{MEAS}$ and of $PL_{REF}$ as solid lines.

In fig. 28 the value of the reference contact area lengths, $PL_{REF}$, is represented by a solid circle while the value of the measured contact area lengths, $PL_{MEAS}$, is represented by a solid square.

## Claims

1. Method for monitoring a tire (1) of a vehicle (100), the method comprising:

   a) associating a monitoring unit (2) to said tire (1), said monitoring unit (2) comprising at least one sensing element (3) adapted to measure at least one quantity descriptive of deformations of said tire (1);
   b) fitting said (1) tire to a wheel of a vehicle (100) and operating said vehicle (100) so as to cause rotation of said tire (1) on a rolling surface at a tire rotation frequency $\omega_R$, wherein, due to said fitting and operating, said tire (1) is deformed so as to form a contact area between said tire (1) and said rolling surface; **characterized by**
   c) measuring said quantity during tire rotation at a sampling frequency $\omega_S$ for an amount of time extending over multiple tire rotations, so as to obtain a plurality of sampling points comprising contact area points representative of passages of said monitoring unit (2) in correspondence of said contact area over said multiple tire rotations, wherein said sampling frequency $\omega_S$ differs from an integer multiple of a tire rotation frequency $N\omega_R$ and wherein N is a positive integer number greater than, or equal to, one;
   d) assembling in a predetermined time slot, or angular slot, said plurality of sampling points so as to reconstruct a curve estimating a variation of said quantity at least at said contact area in a single rotation of said tire (1);
   e) estimating at least one parameter related to said tire (1) based on said curve;
   f) performing the monitoring of said tire (1) based on said at least one estimated parameter related to said tire (1) .

2. Method according to claim 1, wherein said sampling frequency $\omega_S$ is lower than, or equal to, 1 kHz.

3. Method according to any of the previous claims, wherein said sampling frequency $\omega_S$ differs from an integer multiple of a tire (1) rotation frequency $N\omega_R$, within said amount of time, by an amount $\Delta\omega$, wherein said amount $\Delta\omega$ is comprised between about 0.5 % of $N\omega_R$ and 10% of $N\omega_R$.

4. Method according to any of the previous claims, wherein said assembling is carried out by assigning at each sampling point a time position in said predetermined time slot, or an angular position in said predetermined angular slot, based on said sampling frequency $\omega_S$ and on said tire rotation frequency $\omega_R$.

5. Method according to any of the previous claims, wherein said assembling is carried out by said monitoring unit (2).

6. Method according to any of claims 1 to 4, wherein said plurality of sampling points is communicated by said monitoring unit (2) to a controlling unit (11) external to said tire (1), and wherein preferably said assembling is carried out by said controlling unit (11).

7. Method according to any of the previous claims, further comprising starting the measurement of said quantity when at least one of the following access conditions is met:

   - a speed of said vehicle (100) is comprised within a predetermined speed range, preferably within about 40 km/h and about 100 km/h, more preferably within about 60 km/h and about 80 km/h;
- an absolute value of longitudinal acceleration of said vehicle (100) is lower than a predetermined amount, preferably below about 1 m/s$^2$.

8. Method according to any of the previous claims, further comprising stopping the measurement of said quantity when said amount of time exceeds a predetermined maximum amount of time, preferably said predetermined maximum amount of time is comprised between 1 and 60 seconds, more preferably said predetermined maximum amount of time is comprised between 2 and 30 seconds.

9. Method according to any of the previous claims, wherein said monitoring unit (2) is secured to a crown portion of said tire (1), and comprises at least one sensing element (3) adapted to measure at least a radial and/or tangential acceleration of said crown portion during rotation of said tire (1) and at least one further sensing element (4,5) adapted to measure a tire (1) pressure and/or a tire temperature.

10. Method according to any of the previous claims, wherein said at least one parameter related to said tire (1) is a length of said contact area during rotation (PL).

11. Method according to any of the previous claims, wherein said at least one parameter related to said tire (1) is a load exerted on said tire by said vehicle.

12. Method according to claims 10 and 11, wherein said load is estimated based on said length (PL) and said tire pressure.

13. A method for controlling a vehicle (100) having at least one tire (1) fitted thereon, comprising:

- estimating at least one parameter related to said tire (1) by a method according to any of the previous claims;
- communicating said at least one parameter related to said tire (1) to a vehicle control system (12);
- adjusting at least one vehicle control parameter by said vehicle control system (12) based on said estimated parameter related to said tire (1).

14. System for monitoring a tire (1) of a vehicle (100), the system comprising a monitoring unit (2) adapted to be associated with said tire (1), said monitoring unit (2) comprising at least one sensing element (3) adapted to measure at least one quantity descriptive of deformations of said tire (1), wherein the system further comprises at least one processing unit (6,11,18) comprising software modules being adapted to estimate at least one parameter related to said tire (1) when said tire (1) is fitted to a wheel of a vehicle (100) and said vehicle is operated so as to cause rotation of said tire (1) on a rolling surface, and wherein, due to said fitting and operating, said tire is deformed so as to form a contact area between said tire and said rolling surface, **characterized in that** said software modules are adapted to:

a) measure said quantity during tire rotation at a sampling frequency $\omega_S$ for an amount of time extending over multiple tire rotations, so as to obtain a plurality of sampling points comprising contact area points representative of passages of said monitoring unit (2) in correspondence of said contact area, wherein said sampling frequency $\omega_S$ differs from an integer multiple of a tire rotation frequency $N\omega_R$, and wherein N is a positive integer number greater than, or equal to, one,
b) assemble in a predetermined time slot, or angular slot, said plurality of sampling points so as to reconstruct a curve estimating a variation of said quantity at least at said contact area in a single rotation of said tire (1);
c) estimate at least one parameter related to said tire (1) based on said curve;
d) provide said at least one estimated parameter related to said tire (1) to at least one interface towards a control system configured to perform the monitoring of said tire (1) based on said at least one estimated parameter related to said tire (1).

15. A vehicle (100) having at least one tire fitted thereon, comprising a system for monitoring said at least one tire (1) according to claim 14 and a vehicle control system (12) being adapted to control said vehicle (100), wherein said system for monitoring said tire (1) is adapted to communicate said at least one estimated parameter related to said tire (1) to said vehicle control system, and wherein said vehicle control system (12) is adapted to adjust at least one vehicle control parameter based on said at least one estimated parameter related to said tire.

**Patentansprüche**

1. Verfahren zum Überwachen eines Reifens (1) eines Fahrzeugs (100), wobei das Verfahren umfasst:

   a) Zuordnen einer Überwachungseinheit (2) an den Reifen (1), wobei die Überwachungseinheit (2) zumindest ein Sensorelement (3) umfasst, das dazu geeignet ist, zumindest eine Quantität zu erfassen, die Verformungen des Reifens (1) beschreibt;
   b) Montieren (1) des Reifens an einem Rad eines Fahrzeugs (100) und Betreiben des Fahrzeugs (100), um eine Drehung des Reifens (1) auf einer Rolloberfläche mit einer Reifendrehfrequenz $\omega_R$ zu veranlassen, wobei aufgrund der Montage und des Betriebs der Reifen (1) verformt wird, um einen Kontaktbereich zwischen dem Reifen (1) und der Rolloberfläche zu bilden; **gekennzeichnet durch**
   c) Messen der Quantität während der Reifendrehung mit einer Abtastfrequenz $\omega_S$ für eine Zeitperiode, die sich über mehrere Reifendrehungen erstreckt, um eine Vielzahl von Abtastpunkten zu erhalten, die Kontaktbereichspunkte umfassen, die Durchgänge der Überwachungseinheit (2) in Entsprechung zu dem Kontaktbereich über mehrere Reifendrehungen darstellen, wobei die Abtastfrequenz $\omega_S$ sich von einem ganzzahligen Vielfachen einer Reifendrehfrequenz $N\omega_R$ unterscheidet und wobei N eine positive ganze Zahl größer oder gleich eins ist;
   d) Gruppieren der Vielzahl von Abtastpunkten in einem vorbestimmten Zeitschlitz oder Winkelschlitz, um eine Kurve zu rekonstruieren, die eine Variation der Quantität zumindest an dem Kontaktbereich in einer einzelnen Drehung des Reifens (1) abschätzt;
   e) Abschätzen zumindest eines Parameters in Verbindung mit dem Reifen (1) auf Grundlage der Kurve;
   f) Durchführen der Überwachung des Reifens (1) auf Grundlage des zumindest einen abgeschätzten Parameters in Verbindung mit dem Reifen (1).

2. Verfahren nach Anspruch 1, wobei die Abtastfrequenz $\omega_S$ kleiner als oder gleich 1 kHz ist.

3. Verfahren nach einem der vorhergehenden Ansprüche, wobei die Abtastfrequenz $\omega_S$ sich von einem ganzzahligen Vielfachen einer Drehfrequenz $N\omega_R$ des Reifens (1) innerhalb der Zeitperiode um einen Betrag $\Delta\omega$ unterscheidet, wobei der Betrag $\Delta\omega$ zwischen etwa 0,5 % von $N\omega_R$ und 10 % von $N\omega_R$ liegt.

4. Verfahren nach einem der vorhergehenden Ansprüche, wobei das Gruppieren durchgeführt wird, indem an jedem Abtastpunkt eine Zeitposition in dem vorbestimmten Zeitschlitz oder eine Winkelposition in dem vorbestimmten Winkelschlitz zugeordnet wird, auf Grundlage der Abtastfrequenz $\omega_S$ und der Reifendrehfrequenz $\omega_R$.

5. Verfahren nach einem der vorhergehenden Ansprüche, wobei das Gruppieren durch die Überwachungseinheit (2) durchgeführt wird.

6. Verfahren nach einem der Ansprüche 1 bis 4, wobei die Vielzahl von Abtastpunkten durch die Überwachungseinheit (2) an eine Steuereinheit (11) kommuniziert wird, die außerhalb des Reifens (1) liegt, und wobei das Gruppieren vorzugsweise von der Steuereinheit (11) durchgeführt wird.

7. Verfahren nach einem der vorhergehenden Ansprüche, ferner umfassend das Starten der Messung der Quantität, wenn zumindest eine der folgenden Bedinungen erfüllt ist:

   - eine Geschwindigkeit des Fahrzeugs (100) liegt innerhalb eines vorbestimmten Geschwindigkeitsbereichs, vorzugsweise innerhalb etwa 40 km/h und etwa 100 km/h, noch bevorzugter innerhalb etwa 60 km/h und etwa 80 km/h;
   - ein absoluter Wert der Längsbeschleunigung des Fahrzeugs (100) ist geringer als ein vorbestimmter Betrag, vorzugsweise unter etwa 1 m/s$^2$.

8. Verfahren nach einem der vorhergehenden Ansprüche, ferner umfassend das Stoppen der Messung der Quantität, wenn die Zeitperiode eine vorbestimmte maximale Zeitperiode überschreitet, wobei die vorbestimmte maximale Zeitperiode zwischen 1 und 60 Sekunden liegt und die vorbestimmte maximale Zeitperiode noch bevorzugter zwischen 2 und 30 Sekunden liegt.

9. Verfahren nach einem der vorhergehenden Ansprüche, wobei die Überwachungseinheit (2) an einem Zenithabschnitt des Reifens (1) gesichert wird, und zumindest ein Sensorelement (3) umfasst, das dazu geeignet ist, zumindest eine radiale und/oder tangentiale Beschleunigung des Zenithabschnitts während der Drehung des Reifens (1) zu messen, sowie zumindest ein weiteres Sensorelement (4, 5), das dazu geeignet ist einen Druck des Reifens (1) und/oder eine Reifentemperatur zu messen.

10. Verfahren nach einem der vorhergehenden Ansprüche, wobei der zumindest eine Parameter in Verbindung mit dem Reifen (1) eine Länge des Kontaktbereichs während der Drehung (PL) ist.

11. Verfahren nach einem der vorhergehenden Ansprüche, wobei der zumindest eine Parameter in Verbindung mit dem Reifen (1) eine Last ist, die durch das Fahrzeug auf den Reifen ausgeübt wird.

12. Verfahren nach einem der Ansprüche 10 und 11, wobei die Last auf Grundlage der Länge (PL) und des Reifendrucks abgeschätzt wird.

13. Verfahren zur Steuerung eines Fahrzeugs (100), das daran zumindest einen Reifen (1) montiert hat, umfassend:

   - Abschätzen zumindest eines Parameters in Verbindung mit dem Reifen (1) durch ein Verfahren nach einem der vorhergehenden Ansprüche;
   - Kommunizieren des zumindest einen Parameters in Verbindung mit dem Reifen (1) an ein Fahrzeugsteuersystem (12) ;
   - Einstellen zumindest eines Fahrzeug-Steuerparameters durch das Fahrzeugsteuersystem (12) auf Grundlage des abgeschätzten Parameters in Verbindung mit dem Reifen (1).

14. System zum Überwachen eines Reifens (1) eines Fahrzeugs (100), wobei das System eine Überwachungseinheit (2) umfasst, die dazu geeignet ist, dem Reifen (1) zugeordnet zu werden, wobei die Überwachungseinheit (2) zumindest ein Sensorelement (3) umfasst, das dazu geeignet ist, zumindest eine Quantität zu messen, die Verformungen des Reifens (1) beschreibt, wobei das System ferner zumindest eine Verarbeitungseinheit (6, 11, 18) umfasst, die Softwaremodule umfasst, die dazu geeignet sind, zumindest einen Parameter in Verbindung mit dem Reifen (1) abzuschätzen, wenn der Reifen (1) an einem Rad eines Fahrzeugs (100) montiert ist und das Fahrzeug betrieben wird, um eine Drehung des Reifens (1) auf einer Rolloberfläche zu veranlassen, und wobei, aufgrund der Montage und des Betriebs, der Reifen verformt wird, um einen Kontaktbereich zwischen dem Reifen und der Rolloberfläche zu bilden, **dadurch gekennzeichnet, dass** die Softwaremodule dazu geeignet sind:

   a) die Quantität während der Reifendrehung mit einer Abtastfrequenz $\omega_S$ für eine Zeitperiode, die sich über mehrere Reifendrehungen erstreckt, zu messen, um eine Vielzahl von Abtastpunkten zu erhalten, die Kontaktbereichspunkte umfassen, die Durchgänge der Überwachungseinheit (2) in Entsprechung zu dem Kontaktbereich darstellen, wobei die Abtastfrequenz $\omega_S$ sich von einem ganzzahligen Vielfachen einer Reifendrehfrequenz $N\omega_R$ unterscheidet und wobei N eine positive ganze Zahl größer oder gleich eins ist,
   b) die Vielzahl von Abtastpunkten in einem vorbestimmten Zeitschlitz oder Winkelschlitz zu gruppieren, um eine Kurve zu rekonstruieren, die eine Variation der Quantität zumindest an dem Kontaktbereich in einer einzelnen Drehung des Reifens (1) abschätzt;
   c) zumindest einen Parameter in Verbindung mit dem Reifen (1) auf Grundlage der Kurve abzuschätzen;
   d) den zumindest einen abgeschätzten Parameter in Verbindung mit dem Reifen (1) an zumindest eine Schnittstelle mit einem Steuersystem bereitzustellen, das dazu ausgestaltet ist, die Überwachung des Reifens (1) auf Grundlage des zumindest einen abgeschätzten Parameters in Verbindung mit dem Reifen (1) durchzuführen.

15. Fahrzeug (100), das zumindest einen Reifen daran montiert hat, umfassend ein System zum Überwachen des zumindest einen Reifens (1) nach Anspruch 14 und ein Fahrzeugsteuersystem (12), das dazu geeignet ist, das Fahrzeug (100) zu steuern, wobei das System zum Überwachen des Reifens (1) dazu geeignet ist, den zumindest einen abgeschätzten Parameter in Verbindung mit dem Reifen (1) an das Fahrzeugsteuersystem zu kommunizieren, und wobei das Fahrzeugsteuersystem (12) dazu geeignet ist, zumindest einen Fahrzeug-Steuerparameter auf Grundlage des zumindest einen abgeschätzten Parameters in Verbindung mit dem Reifen einzustellen.

**Revendications**

1. Procédé de surveillance d'un pneu (1) d'un véhicule (100), le procédé comprenant :

   a) l'association d'une unité de surveillance (2) audit pneu (1), ladite unité de surveillance (2) comprenant au moins un élément de détection (3) adapté pour mesurer au moins une quantité décrivant des déformations dudit pneu (1) ;

b) le montage dudit pneu (1) sur une roue d'un véhicule (100) et le fonctionnement dudit véhicule (100) de manière à provoquer la rotation dudit pneu (1) sur une surface de roulement à une fréquence de rotation de pneu $\omega_R$, dans lequel, du fait dudit montage et dudit fonctionnement, ledit pneu (1) est déformé de manière à former une zone de contact entre ledit pneu (1) et ladite surface de roulement ; **caractérisé par**

c) la mesure de ladite quantité pendant la rotation de pneu à une fréquence d'échantillonnage $\omega_S$ pendant une durée s'étendant sur de multiples rotations de pneu, de manière à obtenir une pluralité de points d'échantillonnage comprenant des points de zone de contact représentatifs de passages de ladite unité de surveillance (2) en correspondance de ladite zone de contact sur lesdites multiples rotations de pneu, dans lequel ladite fréquence d'échantillonnage $\omega_S$ diffère d'un multiple entier d'une fréquence de rotation de pneu $N\omega_R$, et dans lequel N est un nombre entier positif supérieur ou égal à un ;

d) l'assemblage dans un intervalle de temps, ou un intervalle angulaire, prédéterminé de ladite pluralité de points d'échantillonnage de manière à reconstruire une courbe estimant une variation de ladite quantité au moins au niveau de ladite zone de contact en une seule rotation dudit pneu (1) ;

e) l'estimation d'au moins un paramètre lié audit pneu (1) sur la base de ladite courbe ;

f) l'exécution de la surveillance dudit pneu (1) sur la base dudit au moins un paramètre estimé lié audit pneu (1) .

2. Procédé selon la revendication 1, dans lequel ladite fréquence d'échantillonnage $\omega_S$ est inférieure ou égale à 1 KHz.

3. Procédé selon l'une des revendications précédentes, dans lequel ladite fréquence d'échantillonnage $\omega_S$ diffère d'un multiple entier d'une fréquence de rotation de pneu (1) $N\omega_R$, dans ladite durée, d'une quantité $\Delta\omega$, dans lequel ladite quantité $\Delta\omega$ est comprise entre environ 0,5% de $N\omega_R$ et 10% de $N\omega_R$.

4. Procédé selon l'une des revendications précédentes, dans lequel ledit assemblage est réalisé en attribuant à chaque point d'échantillonnage une position temporelle dans ledit intervalle de temps prédéterminé, ou une position angulaire dans ledit intervalle angulaire prédéterminé, sur la base de ladite fréquence d'échantillonnage $\omega_S$ et de ladite fréquence de rotation de pneu $\omega_R$.

5. Procédé selon l'une des revendications précédentes, dans lequel ledit assemblage est réalisé par ladite unité de surveillance (2).

6. Procédé selon l'une des revendications 1 à 4, dans lequel ladite pluralité de points d'échantillonnage est communiquée par ladite unité de surveillance (2) à une unité de commande (11) externe audit pneu (1), et dans lequel, de préférence, ledit assemblage est réalisé par ladite unité de commande (11).

7. Procédé selon l'une des revendications précédentes, comprenant en outre le démarrage de la mesure de ladite quantité lorsqu'au moins l'une des conditions d'accès suivantes est atteinte :

- une vitesse dudit véhicule (100) est comprise dans une plage de vitesse prédéterminée, de préférence entre environ 40 km/h et environ 100 km/h, plus préférablement entre environ 60 km/h et environ 80 km/h ;
- une valeur absolue d'accélération longitudinale dudit véhicule (100) est inférieure à une quantité prédéterminée, de préférence inférieure à environ 1 m/s$^2$.

8. Procédé selon l'une des revendications précédentes, comprenant en outre l'arrêt de la mesure de ladite quantité lorsque ladite durée dépasse une durée maximale prédéterminée, de préférence ladite durée maximale prédéterminée est comprise entre 1 et 60 secondes, plus préférablement ladite durée maximale prédéterminée est comprise entre 2 et 30 secondes.

9. Procédé selon l'une des revendications précédentes, dans lequel ladite unité de surveillance (2) est fixée à une partie de sommet dudit pneu (1), et comprend au moins un élément de détection (3) adapté pour mesurer au moins une accélération radiale et/ou tangentielle de ladite partie de sommet pendant la rotation dudit pneu (1) et au moins un autre élément de détection (4, 5) adapté pour mesurer une pression de pneu (1) et/ou une température de pneu.

10. Procédé selon l'une des revendications précédentes, dans lequel ledit au moins un paramètre lié audit pneu (1) est une longueur de ladite zone de contact pendant la rotation (PL).

11. Procédé selon l'une des revendications précédentes, dans lequel ledit au moins un paramètre lié audit pneu (1) est une charge exercée sur ledit pneu par ledit véhicule.

**12.** Procédé selon les revendications 10 et 11, dans lequel ladite charge est estimée sur la base de ladite longueur (PL) et de ladite pression de pneu.

**13.** Procédé de commande d'un véhicule (100) ayant au moins un pneu (1) monté dessus, comprenant :

- l'estimation d'au moins un paramètre lié audit pneu (1) par un procédé selon l'une des revendications précédentes ;
- la communication dudit au moins un paramètre lié audit pneu (1) à un système de commande de véhicule (12) ;
- le réglage d'au moins un paramètre de commande de véhicule par ledit système de commande de véhicule (12) sur la base dudit paramètre estimé lié audit pneu (1).

**14.** Système de surveillance d'un pneu (1) d'un véhicule (100), le système comprenant une unité de surveillance (2) adaptée pour être associée audit pneu (1), ladite unité de surveillance (2) comprenant au moins un élément de détection (3) adapté pour mesurer au moins une quantité décrivant des déformations dudit pneu (1), dans lequel le système comprend en outre au moins une unité de traitement (6, 11, 18) comprenant des modules logiciels adaptés pour estimer au moins un paramètre lié audit pneu (1) lorsque ledit pneu (1) est monté sur une roue d'un véhicule (100) et que ledit véhicule fonctionne de manière à provoquer la rotation dudit pneu (1) sur une surface de roulement, et

dans lequel, du fait dudit montage et dudit fonctionnement, ledit pneu est déformé de manière à former une zone de contact entre ledit pneu et ladite surface de roulement, **caractérisé en ce que** lesdits modules logiciels sont adaptés pour :

a) mesurer ladite quantité pendant la rotation de pneu à une fréquence d'échantillonnage $\omega_S$ pendant une durée s'étendant sur de multiples rotations de pneu, de manière à obtenir une pluralité de points d'échantillonnage comprenant des points de zone de contact représentatifs de passages de ladite unité de surveillance (2) en correspondance avec ladite zone de contact, dans lequel ladite fréquence d'échantillonnage $\omega_s$ diffère d'un multiple entier d'une fréquence de rotation de pneu $N\omega_R$, et dans lequel N est un nombre entier positif supérieur ou égal à un,

b) assembler dans un intervalle de temps, ou un intervalle angulaire, prédéterminé ladite pluralité de points d'échantillonnage de manière à reconstruire une courbe estimant une variation de ladite quantité au moins au niveau de ladite zone de contact en une seule rotation dudit pneu (1) ;

c) estimer au moins un paramètre lié audit pneu (1) sur la base de ladite courbe ;

d) fournir ledit au moins un paramètre estimé lié audit pneu (1) à au moins une interface vers un système de commande configuré pour exécuter la surveillance dudit pneu (1) sur la base dudit au moins un paramètre estimé lié audit pneu (1).

**15.** Véhicule (100) ayant au moins un pneu monté dessus, comprenant un système de surveillance dudit au moins un pneu (1) selon la revendication 14 et un système de commande de véhicule (12) adapté pour commander ledit véhicule (100), dans lequel ledit système de surveillance dudit pneu (1) est adapté pour communiquer ledit au moins un paramètre estimé lié audit pneu (1) audit système de commande de véhicule, et dans lequel ledit système de commande de véhicule (12) est adapté pour régler au moins un paramètre de commande de véhicule sur la base dudit au moins un paramètre estimé lié audit pneu.

Fig. 1

EP 3 898 290 B1

Fig. 2

A (m/s²)

t (s)

Fig. 3

$T_R$ = tire rotation period
$T_S$ = sampling period = $T_R$ + $\Delta T$

$T_R$

$T_S$

$T_S$

$T_R$

$T_R$

t

0
First tire
round trip

$T_R$
Second tire
round trip

$2T_R$
Third tire
round trip

$3T_R$
$n^{th}$ tire
round trip

$nT_R$

EP 3 898 290 B1

Fig. 4

(1)

(2)

EP 3 898 290 B1

Fig. 5

## Fig. 6

EP 3 898 290 B1

Fig. 7

(2)
(11)
(15)
(14)
(17)
(16)
(18)
(13)
(12)

Fig. 8

Fig. 9

Fig. 10

Fig. 11

EP 3 898 290 B1

Fig. 12

Fig. 13

Fig. 14

Fig. 15

EP 3 898 290 B1

## Fig. 16

Fig. 17

Fig. 18

Radial acceleration [m/s²] vs Time [s]

Fig. 19

EP 3 898 290 B1

Fig. 20

Fig. 21

EP 3 898 290 B1

Fig. 22

EP 3 898 290 B1

## Fig. 23

Fig. 24

EP 3 898 290 B1

Fig. 25

EP 3 898 290 B1

Fig. 26

## Fig. 27

EP 3 898 290 B1

# Fig. 28

**REFERENCES CITED IN THE DESCRIPTION**

**Patent documents cited in the description**

- EP 1202867 A1
- EP 1449684 A1
- EP 1572474 A1
- EP 1487681 A1
- EP 1642108 A1
- EP 1676112 A1
- EP 1675735 A1
- EP 1678019 A1

- EP 1794007 A1
- WO 2008065465 A1
- EP 2346725 A1
- EP 2352653 A1
- WO 2005042322 A
- WO 2012042369 A
- WO 2012085655 A